# EUROPEAN PATENT APPLICATION

(11) **EP 4 674 917 A1**
(43) Date of publication of application: **07.01.2026**
(21) Application number: 24198760.1
(22) Date of filing: 05.09.2024
(51) Int. Cl.: C09C 1/04, C01G 9/02, C09C 1/50, B60C 1/00, C08K 3/04, C08L 9/06

(54) **CARBON BLACK**

(30) Priority: 05.07.2024 EP 24186957
(71) Applicant: Orion Engineered Carbons GmbH, 65760 Eschborn (DE)
(72) Inventor: Westenberg, Hauke, 50321 Brühl (DE); Timmermans, Eddy, 50354 Hürth (DE)
(74) Representative: f & e patent

(57) **Abstract**

The present invention relates to a carbon black and the use of said carbon back. The present invention further relates to rubber compositions and plastic compositions comprising said carbon black as well as the use of these rubber compositions. Moreover, the present invention relates to tires as well as articles comprising said rubber composition.

## Description

### TECHNICAL FIELD

The present invention relates to a carbon black and the use of said carbon back. The present invention further relates to rubber compositions and plastic compositions comprising said carbon black as well as the use of these rubber compositions. Moreover, the present invention relates to tires as well as articles comprising said rubber composition.

### TECHNICAL BACKGROUND

Carbon black represents a raw material that is widely employed in industry as an additive for various different applications, for example as a colouring agent or pigment, reinforcing filler or conductive agent in the manufacture of paints, coatings, inks, electrodes or plastic or rubber articles. Carbon blacks are produced by controlled thermal or thermal-oxidative decomposition of hydrocarbon precursors such as oils, natural gas or acetylene. Established carbon black production processes include the furnace black process, the gas black process, the lamp black process, the acetylene process or the thermal black process, wherein more than 90% of all carbon blacks are currently produced by the furnace black process.

In the prior art, the feedstock for the production of carbon black in an entrained flow reactor, such as in a furnace reactor, is conventionally a liquid carbon-containing feedstock. Liquid carbon-containing feedstocks are for example liquid hydrocarbons, such as cracker oil like oils derived from a steam cracker or fluidized catalytic cracker. A use of particulate carbon-containing feedstocks has generally been considered problematic and less suitable as e.g. transformation of particulate carbon-containing feedstocks to gaseous components is considerably slower compared to liquid carbon-containing feedstocks such that it is deemed difficult to achieve suitable pyrolysis of particulate carbon-containing feedstocks.

Carbonaceous scrap materials such as scrap plastic or rubber materials are available in large amounts and low costs and can contain significant amounts of carbon black, e.g., as reinforcing filler, conductive agent or pigment. For instance, end-of-life tires represent a major source of scrap rubber, available in huge amounts ending up frequently as landfill, being environmentally problematic. Efficient recycling of such scrap materials and recovery of components contained thereby to bring them to a new use is of continuous interest.

In one approach, scrap tire material can be pyrolyzed in a pyrolysis reactor. The pyrolysis is typically carried out at relatively low temperatures such as about 500 °C and a liquid, a gaseous, and a solid fraction obtained. The liquid fraction can then be used as feedstock to produce new or virgin carbon black (vCB) in an entrained flow reactor such as a furnace reactor. The solid fraction comprises recovered carbon black (rCB). rCB is a complex mixture resulting from the compounds used during the pyrolysis. The compounds used in the pyrolysis process may contain various components other than carbon black, such as inorganic additives and fillers (e.g., zinc oxide, silicon oxide and calcium carbonate) and traces of steel.

US 2002/0117388 A1 relates to the aforementioned pyrolysis of scrap rubber materials including old tires. The aim of US 2002/0117388 A1 is to recover the components in the scrap rubber materials such as carbon black. After the pyrolysis, virgin carbon black can be formed from the pyrolysis gas or liquid.

However, the solid yield of the pyrolysis at low temperatures is low and a subsequent manufacturing process is required to obtain carbon black from the liquid fraction of the pyrolysis. The broad particle size distribution from the micrometer to centimeter range that the rCB exhibits after leaving the pyrolysis reactor further requires the use of efficient grinding and sifting technology. Additionally, the electrical conductivity of recovered carbon black after pyrolysis is insufficient for rubber articles which require to provide, e.g., explosion protection, such as fuel and chemical hoses, conveyor belts, etc.

Accordingly, it is an objective of the present invention to provide carbon blacks and processes to obtain carbon black, which overcome or alleviate at least some of the above-mentioned deficiencies and limitations of the prior art. It is desirable to provide carbon blacks having antistatic features. It is further desirable enabling for instance producing carbon blacks in an efficient manner and/or using alternative starting materials or feedstocks, meeting economical and sustainability interests, ideally without adversely affecting the properties and applications of the products. Furthermore, it is desirable to avoid further processing steps after the production of the carbon blacks, e.g., grinding, so that the carbon blacks can be used in applications directly after production.

### SUMMARY OF THE INVENTION

The present invention relates to a carbon black having an ash content of equal to or more than 3 wt.-% and a volume resistivity of equal to or less than 1·10⁷ Ω·cm as determined in an emulsion-styrene-butadiene rubber (ESBR) containing 50 phr of the carbon black as described in the description, wherein the wt.-% is based on the total weight of the carbon black, wherein the ash content is determined according to ASTM D1506-15 at 550 °C, 16 h.

The present invention further relates to use of the carbon black as described above as reinforcing filler or additives, UV stabilizer, conductive carbon black or pigment.

Moreover, the present invention relates to use of the carbon black as described above in rubber, plastics, inks such as printing inks, inkjet inks or other inks, toners, lacquers, coatings, papers, batteries or black matrix applications.

Also within the scope is a rubber composition, wherein the rubber composition comprises (a) a rubber material and (b) a carbon black material comprising the carbon black as described above.

The present invention also relates to a tire made of the rubber composition as described above.

Furthermore, the present invention relates to an article made of the rubber composition as described above being a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

The present invention also concerns use of the rubber composition as described above for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

Moreover, the present invention relates a plastic composition comprising a plastic material and a carbon black material comprising a carbon black as described above.

These and other optional features and advantages of the present invention are described in more detail in the following description.

### BRIEF DESCRIPTION OF THE DRAWINGS

Figure 1 shows a cross-sectional view of a furnace reactor that can be used according to the present invention.
Figure 2 shows a cross-sectional view of a feeding and mixing device comprising a nozzle that can be used according to the present invention.
Figure 3 shows the top (a) and the underside (b) of the vulcanizate sheet specimen coated with conductive silver.

### DETAILED DESCRIPTION

As used herein, the term "comprising" is understood to be open-ended and to not exclude the presence of additional undescribed or unrecited elements, materials, ingredients or method steps. The terms "including", "containing" and like terms are understood to be synonymous with "comprising". As used herein, the term "consisting of" is understood to exclude the presence of any unspecified element, ingredient or method step.

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g. 1 to 6.3, or 5.5 to 10, or 2.7 to 6.1.

All parts, amounts, concentrations etc. referred to herein are by weight, unless specified otherwise.

As mentioned above, the present invention relates to a carbon black having an ash content of equal to or more than 3 wt.-% and a volume resistivity of equal to or less than 1·10⁷ Ω·cm. The wt.-% is based on the total weight of the carbon black. The ash content of the carbon black is determined according to ASTM D1506-15 at 550 °C, 16 h. The volume resistivity is determined in an emulsion-styrene-butadiene rubber (ESBR) containing 50 phr of the carbon black. As used herein, the term "phr" refers to parts by weight of the recited respective material per 100 parts by weight of rubber or elastomer. The measurement of the volume resistivity is described in more detail below and in full detail in the examples.

The carbon black according to the present invention has ash content of equal to or more than 3 wt.-%, such as equal to or more than 5 wt.-%, wherein the wt.-% is based on the total weight of the carbon black. The ash content of the carbon black is determined according to ASTM D1506-15 at 550 °C, 16 h. The carbon black according to the present invention may have an ash content of equal to or less than 25 wt.-%, such as equal to or less than 20 wt.-%, wherein the wt.-% is based on the total weight of the carbon black. A person skilled in the art will appreciate that any range between any of the explicitly disclosed lower and upper limit is herein disclosed. Accordingly, the carbon black of the present invention may have an ash content in the range of 3 to 25 wt.-%, preferably of 3 to 20 wt.-%, more preferably of 5 to 20 wt.-%, wherein the wt.-% is based on the total weight of the carbon black.

The carbon black according to the present invention has a volume resistivity of equal to or less than 1·10⁷ Q cm, such as equal to or less than 1·10⁶ Ω·cm. The volume resistivity is determined in an emulsion-styrene-butadiene rubber (ESBR) containing 50 phr of the carbon black. Particularly, the volume resistivity can be determined in an emulsion-styrene-butadiene rubber (ESBR) containing 50 phr of the carbon black as described in the examples, such as under item "Measuring the volume resistivity". Moreover, the cured emulsion-styrene-butadiene rubber (ESBR) containing 50 phr carbon black as prepared under items "Preparation of vulcanizable rubber compositions" and "Curing of the vulcanizable rubber compositions" can be used to measure the volume resistivity.

The emulsion-styrene-butadiene rubber (ESBR) containing 50 phr of the carbon black consist the following components:

| | phr |
|---|---|
| ESBR | 100 |
| Carbon black | 50 |
| ZnO | 3 |
| Stearic Acid | 2 |
| 6PPD | 1 |
| Sulphur | 1.5 |
| n-cyclohexyl-2-benzothiazolesulfenamide-based vulcanization accelerator | 1.5 |

The volume resistivity can be determined in an emulsion-styrene-butadiene rubber (ESBR) containing 50 phr of the carbon black based on DIN EN ISO 3915:2022. The measurement of the volume resistivity is further described in full detail in the examples. The carbon black according to the present invention may have a volume resistivity of equal to or more than 1·10² Q.cm, such as equal to or more than 1·10³ Ω·cm, or equal to or more than 1·10⁴ Ω·cm. A person skilled in the art will appreciate that any range between any of the explicitly disclosed lower and upper limit is herein disclosed. Accordingly, the carbon black of the present invention may have a volume resistivity in a range of 1·10² to 1·10⁷ Q.cm, preferably of 1·10³ to 1·10⁷ Q cm, more preferably of 1·10⁴ to 1·10⁷ Q cm, most preferably of 1·10⁴ to 1·10⁶ Ω·cm.

The carbon black according to the present invention may have a carbon mass fraction of at least 75.0 wt.-%, such as of at least 77.0 wt.-%; wherein the wt.-% is based on the total weight of the carbon black. The carbon mass fraction may be measured using an elemental analyzer with thermal conductivity and infrared detector (vario EL cube CHNS from Elementar). The carbon black according to the present invention may have a carbon mass fraction of 98.0 wt.-% or less; wherein the wt.-% is based on the total weight of the carbon black. A person skilled in the art will appreciate that any range between any of the explicitly disclosed lower and upper limit is herein disclosed. Accordingly, the carbon black according to the present invention may have a carbon mass fraction in a range of from 75.0 to 98.0 wt.-%, such as from 77.0 to 98.0 wt.-%; wherein the wt.-% is based on the total weight of the carbon black.

The carbon black according to the present invention may have a hydrogen mass fraction of at least 0.10 wt.-%, wherein the wt.-% is based on the total weight of the carbon black. The hydrogen mass fraction may be measured using an elemental analyzer with thermal conductivity and infrared detector (vario EL cube CHNS from Elementar). The carbon black according to the present invention may have a hydrogen mass fraction of 0.30 wt.-% or less, such as 0.25 wt.-% or less; wherein the wt.-% is based on the total weight of the carbon black. A person skilled in the art will appreciate that any range between any of the explicitly disclosed lower and upper limit is herein disclosed. Accordingly, the carbon black according to the present invention may have a hydrogen mass fraction in a range of from 0.10 to 0.30 wt.- %, such as from 0.10 to 0.25 wt.- %; wherein the wt.-% is based on the total weight of the carbon black.

The carbon black according to the present invention may have a carbon mass fraction in a range of from 75.0 to 98.0 wt.-%; and a hydrogen mass fraction in a range of 0.10 to 0.30 wt.- %; wherein the wt.-% is based on the total weight of the carbon black. The carbon mass fraction and the hydrogen mass fraction may be measured using an elemental analyzer with thermal conductivity and infrared detector (vario EL cube CHNS from Elementar).

The carbon black according to the present invention may have a nitrogen mass fraction of at least 0.01 wt.-%, wherein the wt.-% is based on the total weight of the carbon black. The nitrogen mass fraction may be measured using an elemental analyzer with thermal conductivity and infrared detector (vario EL cube CHNS from Elementar). The carbon black according to the present invention may have a nitrogen mass fraction of 0.25 wt.-% or less, such as 0.20 wt.-% or less; wherein the wt.-% is based on the total weight of the carbon black. A person skilled in the art will appreciate that any range between any of the explicitly disclosed lower and upper limit is herein disclosed. Accordingly, the carbon black according to the present invention may have a nitrogen mass fraction in a range of from 0.01 to 0.25 wt.-%, such as from 0.01 to 0.20 wt.-%; wherein the wt.-% is based on the total weight of the carbon black.

The carbon black according to the present invention may have a sulfur mass fraction of at least 0.20 wt.-%, wherein the wt.-% is based on the total weight of the carbon black. The sulfur mass fraction may be measured using an elemental analyzer with thermal conductivity and infrared detector (vario EL cube CHNS from Elementar). The carbon black according to the present invention may have a sulfur mass fraction of 3.00 wt.-% or less, such as 2.50 wt.-% or less; wherein the wt.-% is based on the total weight of the carbon black. A person skilled in the art will appreciate that any range between any of the explicitly disclosed lower and upper limit is herein disclosed. Accordingly, the carbon black according to the present invention may have a sulfur mass fraction in a range of from 0.20 to 3.00 wt.-%, such as from 0.20 to 2.50 wt.-%; wherein the wt.-% is based on the total weight of the carbon black.

The carbon black according to the present invention may have an oxygen mass fraction of at least 0.80 wt.-%, wherein the wt.-% is based on the total weight of the carbon black. The oxygen mass fraction may be measured using an elemental analyzer with thermal conductivity and infrared detector (vario EL cube CHNS from Elementar). The carbon black according to the present invention may have an oxygen mass fraction of 3.00 wt.-% or less, such as 2.50 wt.-% or less; wherein the wt.-% is based on the total weight of the carbon black. A person skilled in the art will appreciate that any range between any of the explicitly disclosed lower and upper limit is herein disclosed. Accordingly, the carbon black according to the present invention may have an oxygen mass fraction in a range of from 0.80 to 3.00 wt.-%, such as from 0.80 to 2.50 wt.-%; wherein the wt.-% is based on the total weight of the carbon black.

The carbon black according to the present invention may have a BET surface area of equal to or more than 45 m²/g, such as equal to or more than 50 m²/g, or equal to or more than 60 m²/g. The carbon black according to the present invention may have a BET surface area of equal to or less than 120 m²/g, such as equal to or less than 110 m²/g, or equal to or less than 100 m²/g. The carbon black according to the present invention can have a BET in a range between any of the recited lower and upper limit values. Accordingly, the carbon black may have a BET in a range of from 45 to 120 m²/g, preferably from 50 to 110 m²/g. The STSA is determined according to ASTM D6556-21.

The carbon black according to the present invention may have a STSA of equal to or more than 45 m²/g, such as equal to or more than 50 m²/g, or equal to or more than 60 m²/g. The carbon black according to the present invention may have a STSA of equal to or less than 110 m²/g, such as equal to or less than 100 m²/g, or equal to or less than 95 m²/g. The carbon black according to the present invention can have a STSA in a range between any of the recited lower and upper limit values. Accordingly, the carbon black may have a STSA in a range of from 45 to 110 m²/g, preferably from 50 to 100 m²/g, more preferably 60 to 95 m²/g. The STSA is determined according to ASTM D6556-21.

The carbon black according to the invention can have a transmittance value at 425 nm of 50 % or more, such as 60 % or more, or 70 % or more, or 80 % or more, or 85 % or more. The carbon black according to the invention can have a transmittance value at 425 nm of 100 % or less. The carbon black according to the present invention can have a transmittance value at 425 nm in a range between any of the recited lower and upper limit values. The carbon black of the present invention can have a transmittance value at 425 nm in a range of from 50 to 100 %, preferably from 60 to 100 %, more preferably from 70 to 100 %, even more preferably from 80 to 100 %, most preferably from 85 to 100 %. The transmittance value at 425 nm can be determined according to ASTM D1618-23.

The carbon black according to the present invention may have an oil absorption number (OAN) of equal to or more than 40 mL/100 g, such as equal to or more than 50 mL/100 g. The carbon black according to the present invention may have an oil absorption number (OAN) of equal to or less than 100 mL/100 g, such as equal to or less than 90 mL/100 g, or equal to or less than 80 mL/100 g. The carbon black according to the present invention can have an oil absorption number (OAN) in a range between any of the recited lower and upper limit values. Accordingly, the carbon black may have an oil absorption number (OAN) in a range of from 40 to 100 mL/100 g, preferably from 50 to 90 mL/100 g, more preferably from 50 to 80 mL/100 g. The STSA is determined according to ASTM D2414-22.

The carbon black according to the present invention may have a d95 value of less than or equal to 70 µm, preferably of less than or equal to 50 µm, more preferably of less than or equal to 20 µm. The d95 value can be determined by dry measurement using laser diffraction. The carbon black according to the present invention may have a d95 value of more than or equal to 5 µm. The carbon black according to the present invention can have a d95 value in a range between any of the recited lower and upper limit values. Accordingly, the carbon black may have a d95 value in a range of from 5 to 70 µm, preferably from 5 to 50 µm, more preferably from 5 to 20 µm. The term d95 (or D95) refers to the particle size corresponding to 95 percent of the cumulative volume in the particle size distribution.

According to the present invention, the carbon black can be oxidized. Herein, the term "oxidized" means that the carbon black has been subjected to an oxidative treatment and thus comprises oxygen-containing functional groups. Oxidized carbon blacks, unlike non-oxidized carbon blacks, thus generally have a notable oxygen content and have oxygen-containing functional groups, which can be exemplified, but are not limited to, quinone, carboxyl, phenol, lactol, lactone, anhydride and ketone groups. For example, oxidized carbon blacks can have an oxygen content of 0.5 wt.-% or more, such as 1 wt.-% or more, or 2 wt.-% or more, based on the total weight of the oxidized carbon black material. Typically, the oxygen content does not exceed 20 wt.-%, based on the total weight of the oxidized carbon black material. For example, the oxidized carbon black can contain from 0.5 wt.-% to 20 wt.-%, or from 1 wt.-% to 15 wt.-%, or from 2 wt.-% to 10 wt.-%, or from 2 wt.-% to 5 wt.-% of oxygen, based on the total weight of the oxidized carbon black material.

Oxidized carbon blacks can be produced by various methods known in the art such as for example disclosed in US 6,120,594 and US 6,471,933. Suitable methods include oxidation of a carbon black material with an oxidizing agent as for example peroxides such as hydrogen peroxide, persulfates such as sodium and potassium persulfates, hypohalites such as sodium hypochlorite, ozone or oxygen gas, transition metal-containing oxidants such as permanganate salts, osmium tetroxide, chromium oxides, ceric ammonium nitrates or oxidizing acids such as nitric acid or perchloric acid, and mixtures or combinations thereof.

According to the present invention, the carbon black can further be functionalized. Carbon blacks can be functionalized by treatment using functionalizing agents. Functionalized carbon blacks can for example be obtained by treating an oxidized carbon black with a sulfur-containing primary or secondary amine or a salt thereof as described in WO 2021/001156 A1. Accordingly, the treatment leads to a chemical change of the oxidized carbon black by the sulfur-containing amine imparting functionalities derived from the treatment agent such as sulfur-containing moieties and/or amine groups to the oxidized carbon black.

The carbon black of the present invention may be obtained by a process comprising (i) supplying a zinc containing carbonaceous feedstock to a reactor, (ii) pyrolyzing the zinc containing carbonaceous feedstock in a gas atmosphere in the reactor to form and/or recover carbon black and transfer at least a part of the zinc contained by the carbonaceous feedstock into the gas atmosphere, (iii) separating the formed and/or recovered carbon black from the gas atmosphere. The process may further comprise (iv) depositing a zinc oxide material from said gas atmosphere.

The terms "carbonaceous feedstock" and "carbonaceous material" can be used interchangeably. As used herein, "carbonaceous material" or "carbonaceous feedstock" means any material, which is based on carbon, in elemental form and/or in carbon-containing compounds, as main constituent. The zinc containing carbonaceous material can for example have a carbon content of 50 wt.% or more, such as 60 wt.% or more, or 65 wt.% or more, or 70 wt.% or more, or 75 wt.% or more, or 80 wt.% or more, or 85 wt.% or more, or 90 wt.% or more, or 95 wt.% or more, or 97 wt.% or more, or 98 wt.% or more, based on the total weight of the zinc containing carbonaceous material. The zinc containing carbonaceous material can for example have a carbon content of up to 99.9 wt.%, such as 99.5 wt.% or less, or 99 wt.% or less, or 98 wt.% or less, or 97 wt.% or less, or 95 wt.% or less. The zinc containing carbonaceous material may have a carbon content in a range between any of the recited values, such as in a range from 50 wt.% to 99.9 wt.%, or from 70 wt.% to 95 wt.%, or from 75 to 90 wt.%. The carbon content can be determined by elemental analysis. The carbon content of the carbonaceous material, as specified above, can herein be provided by one or more organic material(s), one or more inorganic carbon-based material(s), or a mixture or combination thereof as carbon source. The carbon source(s) may serve as a source of carbon black.

Examples of organic compounds are C,H-containing compounds, which may optionally further comprise one or more heteroatom(s) such as O, N, S or P. These organic compounds may pyrolyze and newly form carbon black. Preferred organic materials are polymeric materials, such as thermoplastic, thermosetting or elastomeric polymeric materials. The zinc containing carbonaceous material can accordingly in particular comprise a polymeric or plastic material as carbon source. Any organic plastic material known in the art can be used. Thermoplastic as well as duroplastic or thermoset polymers or polymer mixtures or blends can be employed. For example, the plastic material can comprise acrylics such as poly(acrylic acid), or poly(methyl methacrylate), epoxies, polyurethanes, polyamides, polyesters such as polyethylene terephthalate, polycarbonates, polysulfones, polyimides, polyethers, such as polyether sulfone, and polyolefins such as light, medium and high density polyethylene, ethylene-propylene copolymers, either with random or block configuration, polypropylene-maleic acid anhydride, polystyrene, styrene-acrylonitrile copolymers, acrylonitrile-butadiene-styrene copolymers, ethylene vinyl acetate, ethylene-acrylic acid copolymers, vinyl chloride-polypropylene copolymers, polyisobutylene, polybutadiene, and crosslinked polyethylene, whether chemically, thermally, UV or E-beam (EB) crosslinked, and polyphenylene sulfide, polyetheretherketone, polyetherimide, polyarylsulfone and polypropylene oxide modified polyether sulfones.

Particularly preferable, the zinc containing carbonaceous material can comprise one or more elastomers such as rubber materials, in particularly elastomer materials vulcanized with sulphur. The rubbers or elastomers can contain olefinic unsaturation, such as in case of diene-based rubbers or elastomers. Exemplary rubber materials include, but are not limited to natural and synthetic rubbers such as styrene-butadiene-copolymers, emulsion-styrene-butadiene rubber (ESBR), solution-styrene-butadiene rubber (SSBR), ethylene propylene diene monomer (EPDM) rubber, ethylene-propylene rubber (EPM), polybutadiene, polyisoprene, butyl rubber, chloroprene rubber, nitrile rubber, acrylonitrile-butadiene rubber, hydrogenated acrylonitrile-butadiene rubber, polymers and copolymers of butadiene, isoprene, piperylene and isomonoolefin with styrene or a methylstyrene, and halogenated rubber products such as halogenated butyl rubber, chlorinated polyethylene, or chlorosulfonated polyethylene, ethylene-vinylacetate rubber, ethylene-acrylic rubber, epichlorohydrin rubber, or a combination of any of the foregoing. The polymeric material can comprise only one polymer or a mixture of two or more different polymers such as for example a mixture of natural and synthetic rubber.

The one or more organic compounds such as plastic and/or rubber material(s) can comprise 10 wt.% or more, such as 20 wt.% or more, or 30 wt.% or more, or 40 wt.% or more, or 50 wt.% or more, or 60 wt.% or more, or 70 wt.% or more, or 80 wt.% or more, or 90 wt.% or more, based on the total weight of the carbon source(s) present in the zinc containing carbonaceous material. The one or more organic compounds such as plastic and/or rubber material(s) can comprise up to 100 wt.%, such as 99 wt.% or less, or 98 wt.% or less, or 95 wt.% or less, or 90 wt.% or less, or 80 wt.% or less, or 70 wt.% or less, or 60 wt.% or less, based on the total weight of the carbon source(s) present in the zinc containing carbonaceous material. The zinc containing carbonaceous material may comprise the one or more organic compounds such as plastic and/or rubber material(s) in an amount in a range between any of the recited values, such as in a range from 10 to 100 wt.%, or from 20 to 98 wt.%, or from 50 to 95 wt.%, or from 60 to 90 wt.%, based on the total weight of the carbon source(s) present in the zinc containing carbonaceous material.

As mentioned above, the zinc containing carbonaceous material can alternatively or in addition to organic material, such as plastic and/or rubber material, comprise one or more inorganic carbon-based materials as carbon source. Examples of inorganic carbon-based materials include for instance carbon black, activated carbon, graphite, soot, coke, coal, char, carbon nanoparticles or any other carbon-based inorganic material. The inorganic carbon-based material can for instance be used as a filler or additive in a plastic or rubber material. For example, plastic or rubber compositions frequently contain carbon black as reinforcing filler conductive agent and/or pigment. Alternatively, the inorganic carbon-based material may be used as such, for example after recovering it from a plastic or rubber material it was incorporated in as filler or additive.

The inorganic carbon-based material(s) such as carbon black can comprise 0.5 wt.% or more, such as 1 wt.% or more, or 2 wt.% or more, or 3 wt.% or more, or 5 wt.% or more, or 10 wt.% or more, or 15 wt.% or more, or 20 wt.% or more, or 30 wt.% or more, or 50 wt.% or more, based on the total weight of the carbon source(s) present in the zinc containing carbonaceous material. The inorganic carbon-based material(s) can comprise up to 100 wt.%, such as 99 wt.% or less, or 98 wt.% or less, or 95 wt.% or less, or 90 wt.% or less, or 80 wt.% or less, or 70 wt.% or less, or 60 wt.% or less, or 50 wt.% or less, or 40 wt.% or less, or 30 wt.% or less, or 20 wt.% or less, based on the total weight of the carbon source(s) present in the zinc containing carbonaceous material. The zinc containing carbonaceous material may comprise the inorganic carbon-based material(s) in an amount in a range between any of the recited values, such as in a range from 0.5 to 100 wt.%, or from 1 to 70 wt.%, or from 5 to 60 wt.%, or from 10 to 50 wt.%, or from 15 to 40 wt.%, based on the total weight of the carbon source(s) present in the zinc containing carbonaceous material.

The zinc containing carbonaceous material used according to the present invention is characterized in that it further comprises zinc. The zinc can be present in elemental form, and/or in bound form, that is bound in zinc compounds and/or salts. Preferably, the zinc component comprises one or more zinc compound and/or zinc salt, for example originating from its use as additive in the material such as for activation of vulcanization or as pigment or processing aid. The one or more zinc compounds or zinc salts can include organo zinc compounds or salts, inorganic zinc compounds or salts, or a mixture or combination thereof. Non-limiting examples of zinc compounds or zinc salts that can be present in the zinc containing carbonaceous material are for instance zinc oxide, zinc hydroxide, zinc sulfide, organic complexes of zinc, and fatty acid salts of zinc. The zinc containing carbonaceous material generally comprises a notable amount of zinc to achieve a suitable yield of recovered zinc oxide material. On the other hand, a too high zinc content may adversely affect pyrolysis of the carbonaceous material and thereby the volatilization of the zinc component and/or the formation of carbon black. The zinc containing carbonaceous material accordingly typically comprises 0.1 wt.% or more, such as 0.2 wt.% or more, or 0.3 wt.% or more, or 0.5 wt.% or more, or 0.7 wt.% or more, or 1.0 wt.% or more, or 1.5 wt.% or more, or 2.0 wt.% or more, of zinc, based on the total weight of the zinc containing carbonaceous material. The zinc containing carbonaceous material moreover typically comprises zinc in an amount of 10.0 wt.% or less, such as 7.0 wt.% or less, or 5.0 wt.% or less, or 4.0 wt.% or less, or 3.5 wt.% or less, or 3.0 wt.% or less, based on the total weight of the zinc containing carbonaceous material. The zinc containing carbonaceous material may comprise zinc in a range between any of the recited values, such as in a range from 0.1 wt.% to 10 wt.%, preferably from 0.3 wt.% to 5.0 wt.%, or from 0.5 to 4.0 wt.%, or from 1.0 wt.% to 3.0 wt.%. The amounts of zinc as recited herein relate to the amount of zinc determined as elemental metal, irrespective of the form in which the zinc is actually present in the zinc containing carbonaceous material. The amount of zinc can be determined as described in the examples.

The zinc containing carbonaceous material can optionally comprise one or more further components in addition to the above-mentioned carbon source(s) and the zinc component. Such further components can include for example metals other than zinc such as alkali metals, earth alkaline metals, silicon, aluminium, and/or iron as well as salts and/or compounds thereof. The zinc containing carbonaceous material typically contains such further components in a total amount of 40 wt.% or less, such as 30 wt.% or less, or 20 wt.% or less, or 15 wt.% or less, or 10 wt.% or less, based on the total weight of the zinc containing carbonaceous material. The zinc containing carbonaceous material may for example comprise such further components in a total amount of 1 wt.% or more, such as 2 wt.% or more, or 3 wt.% or more, or 4 wt.% or more, or 5 wt.% or more, based on the total weight of the zinc containing carbonaceous material. The zinc containing carbonaceous material may comprise such further components in a total amount in a range between any of the recited values, such as in a range from 1 wt.% to 40 wt.%, or from 3 wt.% to 20 wt.%, or from 5 wt.% to 10 wt. %.

The zinc containing carbonaceous material used according to the present invention preferably comprises or is a scrap material. Scrap material encompasses any waste material, for example from production processes or end-of-life goods. The zinc containing carbonaceous material can for example comprise organic scrap material. The organic scrap material can be scrap made of any organic material described above as carbon source, such as a scrap plastic material and/or scrap rubber material. Alternatively or in addition, the zinc containing carbonaceous material can include an inorganic carbon-based scrap material. The inorganic carbon-based scrap material can be made of any of the inorganic carbon-based materials described above as carbon source. An example of an inorganic carbon-based scrap material would thus be used carbon black. The used carbon black could for instanced be present in a scrap plastic or rubber material, or be obtained therefrom, e.g. by respective recycling processes.

According to the present invention the zinc containing carbonaceous material can in particular be provided in particulate form. This can be done by milling to the desired particle or granulate size. The zinc containing carbonaceous material can in particular comprise or be a plastic granulate, rubber granulate or a combination or mixture thereof, wherein the plastic granulate and/or rubber granulate can optionally comprise an inorganic carbon-based material such as carbon black. The zinc containing carbonaceous material used according to the present invention preferably comprises or is a particulate scrap material. The particulate scrap material can in particular comprise or be a granulate of scrap plastic, granulate of scrap rubber or a combination or mixture thereof. Rubber granulate can for example be made from end-of-life tires, cable sheaths, tubes, conveyor belts, shoe soles, hoses and other rubber goods, or other waste rubber, or mixtures or combinations of any of the foregoing. Plastic granulates can for instance be derived from used plastic packaging like plastic bags, foils, containers, casings etc., from household or industrial sources, end-of-life plastic goods or other waste plastic, or mixtures or combinations of any of the foregoing. Particularly preferred according to the present invention is the use of rubber granulate made from scrap tires and/or other waste rubber. The scrap tires can be milled to obtain a particulate rubber granulate. Generally, the zinc containing carbonaceous material can be provided with a controlled particle size distribution, as set forth in the following.

It is desired that at least 50 wt.-%, preferably at least 60 wt.-%, more preferably at least 70 wt.-%, most preferably at least 80 wt.-%, of the particulate zinc containing carbonaceous material has a particle size of 125 µm to 2 mm, preferably 125 µm to 1 mm, more preferably 250 µm to 1 mm, and most preferably 500 µm to 1000 µm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 2 mm, preferably less than 1 mm, more preferably less than 500 µm, and most preferably less than 250 µm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 500 µm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 1 mm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 2 mm, preferably less than 250 µm, wherein the particle size is measured according to ASTM D 1511-12 (2017).

It is desired that less than 1 wt.-%, preferably at least 0.5 wt.-%, more preferably less than 0.1 wt.-%, most preferably less than 0.01 wt.-%, of the particulate zinc containing carbonaceous material has a particle size of more than 2 mm, preferably more than 1 mm, more preferably more than 500 µm, and most preferably more than 250 µm, wherein the particle size is measured according to ASTM D 1511-12 (2017).

It is particularly preferred that the particulate zinc containing carbonaceous material has a particle size of less than 2 mm, preferably less than 1 mm, more preferably less than 500 µm, and most preferably less than 250 µm, wherein the particle size is measured according to ASTM D 1511-12 (2017).

The particle size of the zinc containing carbonaceous material can be controlled by classifying the particulate zinc containing carbonaceous material, before the particulate zinc containing carbonaceous material is heat treated, e.g. in a reactor. The classification can be done by any means known in the art such as sieving or other means for classification. Classification can for example be performed using a vibratory screener, rotary screener, cyclone, elutriation classifier, air jet sieve and/or dynamic air classifier or a combination of any of the foregoing. Said classification can be used in order to obtain a maximum or minimum desired particle size as described herein.

The particle size of the zinc containing carbonaceous material can be controlled by sieving the particulate carbon-containing feedstock before the particulate carbon-containing feedstock is heat treated, e.g. in a reactor. The sieve sizes as described in ASTM D 1511-12 (2017) can be used. For instance, sieves having openings of 2,000 µm, 1,000 µm, 500 µm, 250 µm, or 125 µm, preferably 500 µm, 250 µm, or 125 µm, can be used. Moreover, the sieve can have openings with a size that restrains particles with a size of more than 2,000 µm, more than 1,000 µm, more than 500 µm, more than 250 µm, or more than 125 µm, preferably more than 500 µm, more than 250 µm, or more than 125 µm.

No more than 10 wt.-%, preferably no more than 5 wt.-%, more preferably no more than 4 wt.-%, and most preferably no more than 2 wt.-% of the particulate zinc containing carbonaceous material should have a particle size of over 4 mm, preferably over 2 mm, more preferably over 1 mm, and most preferably over 0.5 mm, wherein the particle size is measured according to ASTM D 1511-12 (2017).

No more than 10 wt.-%, preferably no more than 5 wt.-%, more preferably no more than 4 wt.-%, and most preferably no more than 2 wt.-% of the particulate zinc containing carbonaceous material should have a particle size of less than 150 µm, preferably less than 125 µm, more preferably less than 110 µm, and most preferably less than 100 µm, wherein the particle size is measured according to ASTM D 1511-12 (2017).

The particle size distribution of the particulate zinc containing carbonaceous material can be measured according to ASTM D 1511-12 (2017) and (a) Sieve No. 10 retains 1 to 10 wt.-%, preferably 1 to 8 wt.-%, more preferably 1 to 5 wt.-%, and most preferably 1 to 3 wt.-% of the particulate zinc containing carbonaceous material, and/or (b) Sieve No. 18 retains 1 to 25 wt.-%, preferably 2 to 20 wt.-%, more preferably 4 to 15 wt.-%, and most preferably 5 to 12 wt.-% of the particulate zinc containing carbonaceous material, and/or (c) Sieve No. 35 retains 10 to 80 wt.-%, preferably 15 to 70 wt.-%, more preferably 20 to 60 wt.-%, and most preferably 25 to 55 wt.-% of the particulate zinc containing carbonaceous material, and/or (d) Sieve No. 60 retains 5 to 70 wt.-%, preferably 10 to 60 wt.-%, more preferably 15 to 50 wt.-%, and most preferably 20 to 45 wt.-% of the particulate zinc containing carbonaceous material, and/or (e) Sieve No. 120 retains 1 to 80 wt.-%, preferably 7 to 70 wt.-%, more preferably 5 to 60 wt.-%, and most preferably 7 to 50 wt.-% of the particulate zinc containing carbonaceous material, and/or (f) Bottom receive pan comprises less than 4 wt.-%, preferably less than 3 wt.-%, more preferably 0 to 2 wt.-%, and most preferably 0.01 to 1 wt.-% of the particulate zinc containing carbonaceous material. It is desirable to choose the desired range for each sieve independently.

The 50 wt.-% cumulative particle size of the particulate carbon-containing feedstock should be from 100 µm to 4 mm preferably 100 µm to 3 mm, more preferably 100 µm to 2 mm, and most preferably 100 µm to 500 µm, wherein the 50 wt.-% cumulative particle size is measured according to ASTM D 1511-12 (2017). The 50 wt.-% cumulative particle size can be interpolated using standard techniques know in the art. It is particularly, preferred that the Rosin-Rammler-Sperling-Bennett distribution (RRSB distribution) is used to interpolate the 50 wt.-% cumulative particle size.

The weight average particle size Dw50 of the particulate zinc containing carbonaceous material can be from 100 µm to 4 mm, preferably 100 µm to 3 mm, more preferably 100 µm to 2 mm, and most preferably 100 µm to 500 µm, wherein the weight average particle size Dw50 is measured according to ASTM D 1511-12 (2017).

The particle size distribution Dw10 of the particulate zinc containing carbonaceous material can be from 100 µm to 250 µm, preferably 110 µm to 220 µm, more preferably 120 µm to 210 µm, and most preferably 130 µm to 200 µm, wherein the particle size distribution Dw10 is measured according to ASTM D 1511-12 (2017).

The particle size distribution of the particulate zinc containing carbonaceous material Dw90 can be from 400 µm to 4 mm, preferably 500 µm to 3 mm, more preferably 600 µm to 2 mm, and most preferably 700 µm to 500 µm, wherein the particle size distribution Dw90 is measured according to ASTM D 1511-12 (2017).

The span of the particle size distributions of the particulate zinc containing carbonaceous material (Dw90-Dw10) / Dw50 can be 0.2 to 1.8, preferably 0.3 to 1.3, more preferably 0.4 to 1.1, most preferably 0.4 to 1.0, wherein the particle size distributions Dw10, Dw50, and Dw90 are measured according to ASTM D 1511-12 (2017).

The Dw50, Dw10, and Dw90 can be interpolated using standard techniques know in the art. It is particularly, preferred that the Rosin-Rammler-Sperling-Bennett distribution (RRSB distribution) is used to interpolate the Dw50, Dw10, and Dw90.

The particle or granulate size may have an influence on the heating rate of the zinc containing carbonaceous material and/or the transfer of the zinc component contained thereby to the gas atmosphere. Smaller granulates or particles have a higher specific surface area so that the heating rate and volatilization can be higher. A fast-heating rate may be beneficial so that the zinc containing carbonaceous material can efficiently evaporate and be pyrolyzed.

Generally, the provided zinc containing carbonaceous material, which can be as described above, is heat treated in a gas atmosphere. By the heat treatment at least a part of the zinc contained by the carbonaceous material can be transferred into the gas atmosphere.

The gas atmosphere in which the zinc containing carbonaceous material is heat treated typically comprises one or more oxygen-containing species. Non-limiting examples of oxygen-containing species include oxygen, ozone, water, CO, CO₂, NOₓ and SOₓ. The oxygen-containing species can serve as oxygen source, for example for pyrolysis of the carbonaceous material and/or reaction with volatilized zinc to form zinc oxide. Alternatively or in addition, the zinc containing carbonaceous material itself may comprise one or more oxygen sources, for example in the form of oxygen-containing organic materials and/or inorganic oxides, such as metal oxides. The gas atmosphere in which the zinc containing carbonaceous material is heat treated may for example comprise oxygen-containing species in an amount of 1 vol.% or more, such as 3 vol.% or more, or 5 vol.% or more, or 10 vol.% or more, or 15 vol.% or more. The gas atmosphere in which the zinc containing carbonaceous material is heat treated may comprise oxygen-containing species in an amount of up to 100 vol.%, such as 70 vol.% or less, or 40 vol.% or less, or 30 vol.% or less, or 25 vol.% or less, or 20 vol.% or less. The gas atmosphere in which the zinc containing carbonaceous material is heat treated may contain oxygen-containing species in a range between any of the recited values, such as in a range from 1 to 100 vol.%, or from 3 to 50 vol.%, or from 5 vol.% to 30 vol.%, or from 10 to 25 vol.%. The gas atmosphere in which the zinc containing carbonaceous material is heat treated typically comprises oxygen. It may for example comprise oxygen in an amount of 1 vol.% or more, or 2 vol.% or more, or 3 vol.% or more, or 4 vol.% or more, or 5 vol.% or more, or 7 vol.% or more, or 10 vol.% or more. The gas atmosphere in which the zinc containing carbonaceous material is heat treated can for example comprise oxygen in an amount of 40 vol.% or less, or 30 vol.% or less, or 25 vol.% or less, or 20 vol.% or less, or 15 vol.% or less. The gas atmosphere in which the zinc containing carbonaceous material is heat treated may comprise oxygen in an amount in a range between any of the recited values, such as in a range from 1 to 40 vol.%, or from 2 to 25 vol.%, or from 5 to 20 vol.%.

The gas atmosphere in which the zinc containing carbonaceous material is heat treated may comprise, alternatively or in addition to the above-mentioned one or more oxygen-containing species, one or more non-oxygen containing species. Non-limiting examples of non-oxygen containing species include nitrogen, hydrogen, H₂S, argon and hydrocarbons such as methane, ethane, ethylene and acetylene. The gas atmosphere in which the zinc containing carbonaceous material is heat treated may for example comprise non-oxygen containing species in an amount of 30 vol.% or more, such as 60 vol.% or more, or 70 vol.% or more. The gas atmosphere in which the zinc containing carbonaceous material is heat treated may comprise non-oxygen containing species in an amount of up to 100 vol.%, such as 97 vol.% or less, or 95 vol.% or less, or 90 vol.% or less, or 85 vol.% or less or less. The gas atmosphere in which the zinc containing carbonaceous material is heat treated may contain non-oxygen containing species in a range between any of the recited values, such as in a range from 30 to 100 vol.%, or from 60 to 97 vol.%, or from 70 vol.% to 90 vol.%. The gas atmosphere in which the zinc containing carbonaceous material is heat treated typically comprises nitrogen. It may for example comprise nitrogen in an amount of 30 vol.% or more, or 50 vol.% or more, or 60 vol.% or more. The gas atmosphere in which the zinc containing carbonaceous material is heat treated can for example comprise nitrogen in an amount of 100 vol.% or less, or 90 vol.% or less, or 80 vol.% or less. The gas atmosphere in which the zinc containing carbonaceous material is heat treated may comprise nitrogen in an amount in a range between any of the recited values, such as in a range from 30 to 100 vol.%, or from 50 to 90 vol.%, or from 60 to 80 vol.%.

The pressure of the gas atmosphere in which the heat treatment is carried out is not particularly limited and can vary. The process of the present invention can be carried out at pressures about the atmospheric pressure or moderate overpressure. The atmospheric pressure under standard conditions is 1,013.25 hPa. The heat treatment of the zinc containing carbonaceous material can accordingly be carried out in a gas atmosphere which has a pressure corresponding to about atmospheric pressure, for example within ±20% of the atmospheric pressure, or moderate overpressure. The gas atmosphere can for example have a pressure of 500 hPa or more, 800 hPa or more, 900 hPa or more, or 1,000 hPa or more. It can have for example a pressure of 2,000 hPa or less, such as 1,500 hPa or less, or 1,200 hPa or less. The gas atmosphere in which the zinc containing carbonaceous material is heat treated, can also be a vacuum atmosphere. Vacuum atmosphere means a gas atmosphere, which is under a vacuum, that is which has a subatmospheric pressure. The applied vacuum is not particularly limited and can comprise low vacuum, moderate vacuum, high vacuum or ultra-high vacuum. Due to cost reasons low to high vacuum, in particular low or moderate vacuum, may preferably be used. The atmosphere in which the heat treatment is carried out can for example have a pressure of 100 hPa or less, such as 10 hPa or less, or 1 hPa or less, or 0.1 hPa or less, or 0.01 hPa or less. The atmosphere in which the heat treatment is carried out can for example have a pressure of 10⁻⁹ hPa or more, or 10⁻⁶ hPa or more, or 10⁻⁵ hPa or more, or 10⁻⁴ hPa or more, or 0.001 hPa or more. The atmosphere in which the zinc containing carbonaceous material is heat treated can have a pressure in a range between any of the above-mentioned values such as in a range from 10⁻⁹ hPa to 2,000 hPa, or from 10⁻⁵ hPa to 10 hPa, or from 0.001 hPa to 10 hPa, or from 1 to 100 hPa, or from 1 hPa to 1,500 hPa, or from 800 hPa to 1,500 hPa.

The heat treatment of the zinc containing carbonaceous material can be conducted in a static gas atmosphere or, more preferably, in a gas flow. Accordingly, the heat treatment of the zinc containing carbonaceous material in the process according to the present invention can optionally comprise subjecting the treated zinc containing carbonaceous material to a gas flow, such as a continuous gas flow. Heat treating of the zinc containing carbonaceous material can therefore be conducted in a gas flow, such as a continuous gas flow, in particular of a gas atmosphere as described above. The average gas flow rate can vary widely, e.g. depending on the size of the apparatus used and/or the amount of zinc containing carbonaceous material that is heat treated therein. The average flow rate of the gas can for example be 1 NL/h or more, such as 5 NL/h or more, or 20 NL/h or more, or 50 NL/h or more, or 100 NL/h or more, or 500 NL/h or more, or 1,000 NL/h or more, or 5,000 NL/h or more, or 10,000 NL/h or more, or 50,000 NL/h or more, or 100,000 NL/h or more. For example, the average flow rate of the gas can be 50,000,000 NL/h or less, such as 25,000,000 NL/h or less, or 15,000,000 NL/h or less, or 10,000,000 NL/h or less, or 5,000,000 NL/h or less, or 1,000,000 NL/h or less, or 100,000 NL/h or less, or 20,000 NL/h or less, or 5,000 NL/h or less, or 2,000 NL/h or less, or 1,000 NL/h or less. The average flow rate can be in a range between any of the recited values, such as in a range from 5 NL/h to 50,000,000 NL/h, or from 1,000 NL/h to 15,000,000 NL/h, or from 100,000 NL/h to 10,000,000 NL/h. The average flow rate of the gas is calculated based on the total volume which the supplied amount of the gas would have under standard conditions (101.325 kPa, 0°C) and the treatment time. The volume of gas can be measured for example by a mass flow meter, which measures the amount of gas per unit time at a certain temperature and pressure, e.g. at room temperature and atmospheric pressure. Integration over time yields then the total volume of gas. The measured total volume of gas can then be converted to a total volume of gas under standard conditions by using the ideal gas law. The total volume of gas under standard conditions expressed in norm litres [NL] is divided by the total treatment time to calculate the average flow rate under standard conditions.

The heat treatment of the zinc containing carbonaceous material in a gas atmosphere as described above can be conducted at any temperature suitable for transferring at least a part of the zinc contained by the carbonaceous material into the gas atmosphere. Heat treating of the zinc containing carbonaceous material can also comprise pyrolyzing at least a part of the carbonaceous material. The heat treatment may in particular comprise heat treating the zinc containing carbonaceous material at a temperature of 800 °C or more, such as 900 °C or more, or 1,000°C or more, such as 1,100°C or more, or 1,200°C or more, or 1,300°C or more, or 1,400°C or more, or 1,500°C or more, or 1,800°C or more. The heat treatment may in particular comprise heat treating the zinc containing carbonaceous material at a temperature of up to 3,500°C, such as 3,000°C or less, or 2,700°C or less, or 2,500°C or less, or 2,000°C or less, or 1,900°C or less, or 1,800°C or less, or 1,700°C or less. The heat treatment may comprise heat treating the zinc containing carbonaceous material at a temperature in a range between any of the recited values. The zinc containing carbonaceous material can for example be heat treated at a temperature in a range from 800°C to 3,500°C, or from 1,000°C to 3,000°C, preferably from 1,400°C to 2,700°C, more preferably from 1,800 to 2,500°C. At temperatures below 800°C the zinc component contained by the carbonaceous material often may not volatilize or only at slow rates and/or such low temperatures may be insufficient for pyrolysis of the carbonaceous material. On the other hand very high temperatures are difficult to handle, impose demanding requirements for the used equipment, and may not be desirable from an efficiency standpoint. Conducting the heat treatment at temperatures above 3,500°C is therefore not desirable, and typically a temperature of 3,000°C or less is used for heat treating the zinc containing carbonaceous material.

The heat treatment of the zinc containing carbonaceous material can be carried out with any equipment or device available for heat treating materials, particularly particulate materials, under conditions as set out herein. For example, the heat treatment of the zinc containing carbonaceous material can be conducted, without being limited thereto, utilizing a convective oven, electric oven, infrared oven, gas fired oven, vacuum oven, conveyor oven, batch oven, fixed bed reactor, fluidized bed reactor, rotary kiln, Auger reactor plasma reactor, vertical reactor or an entrained flow reactor, or a combination thereof. As described in more detail further below, the process according to the present invention can in particular be carried out in a reactor for producing carbon black such as a furnace reactor or a vertical reactor for producing carbon black. Reactors for producing carbon black, such as furnace reactors and vertical reactors are described for example in Industrial Carbon and Graphite Materials: Raw Materials, Production and Applications, 1st edition, 2021, Wiley VCH, vol. II, Chapter 10 "Carbon Black". The apparatus used for the heat treatment should generally be constructed to withstand the temperatures and conditions used in the thermal treatment according to the process of the present invention. The heat treatment apparatus may comprise heating means for controlling the temperature in the heat treatment step. The heating means can be any conventional heating means such as electrical heating means, radiative heating means or means for generating and/or contacting with a hot medium. The heat treatment apparatus may comprise a treatment chamber, in which the zinc containing carbonaceous material may be provided for the heat treatment. The treatment chamber can for example have a volume of 0.1 L or more, or 0.5 L or more, or 1 L or more, or 5 L or more, or 10 L or more, or 50 L or more, or 100 L or more, or 200 L or more, or 500 L or more. The treatment chamber can for example have a volume of 100,000 L or less, or 60,000 L or less, or 40,000 L or less, or 20,000 L or less, or 10,000 L or less, or 5,000 L or less, or 1,000 L or less. The volume of the treatment chamber can be in a range between any of the recited values such as in a range from 0.1 L to 100,000 L, or from 1 L to 60,000 L, or from 10 L to 20,000 L. The heat treatment apparatus can comprise a single treatment chamber or two or more treatment chambers. Providing a zinc containing carbonaceous material can comprise introducing an amount of said zinc containing carbonaceous material into the treatment chamber(s) of the apparatus. Typically, the treatment chamber(s) is fed with the gas atmosphere, through one or more inlets connected to one or more feeding lines from one or more sources. Optionally, a vacuum can be generated in the treatment chamber(s), e.g. by a connected pump. The heat treatment apparatus may further comprise conventional means for flow and/or process control such as sensors, pressure or flow regulation means, valves, and controllers. The one or more than one treatment chamber(s) may be designed such that a flow of gas may be forced through the zinc containing carbonaceous material to be treated, such as to form a fluidized bed, rather than flowing gas for example over the zinc containing carbonaceous material to be treated.

According to the present invention, the heat treatment can in particular comprise contacting the zinc containing carbonaceous material with a hot gas, such as a hot gas flow. The hot gas can form the gas atmosphere in which the zinc containing carbonaceous material is heat treated. The hot gas can accordingly be as described above for the gas atmosphere and the respective gas flow. In the practice of the present invention, the zinc containing carbonaceous material can in particular be injected into the hot gas, particularly hot gas flow. The hot gas flow can be obtained by for example by electrical heating, radiative heating, a plasma, or by combustion of a fuel and oxygen containing gas, or a combination of any of the foregoing. The hot gas can in particular be produced by combustion of a combustible fuel with an oxygen containing gas, e.g. by a burner and/or in a combustion chamber, for instance of a furnace reactor as described further below. The fuel can comprise for example gaseous or liquid hydrocarbons, preferably natural gas, a fuel oil, and/or hydrogen. Non-limiting examples for the oxygen-containing gas include e.g. air, oxygen-enriched air, oxygen-depleted air, or other mixtures comprising oxygen and one or more other gases. The fuel and/or the oxygen-containing gas can optionally be preheated, for example by using a heat exchanger, for example to a temperature between 50 and 900 °C, such as 100 to 900 °C, preferably 300 to 900 °C, and more preferably 450 to 850 °C. Fuel and oxygen-containing gas flow rates can be adjusted to give high temperatures and normally fall close to stoichiometric ratios. The oxygen-containing gas may be supplied in an amount that the k-value is in a range of 0.01 to 10, preferably 0.1 to 5, more preferably 0.5 to 2, and most preferably 0.7 to 1, wherein the k value is defined by the ratio of stoichiometric O₂ amount that is necessary for the complete stoichiometric combustion of the fuel to the actual supplied O₂ amount. The oxygen-containing gas may in particular be supplied in an amount yielding an excess of oxygen with respect to the amount of oxygen for a complete combustion of the fuel. The hot gas resulting from the combustion reaction, which may be contacted with the heat treating the zinc containing carbonaceous material, can have a temperature of 800 °C or more, such as 900 °C or more, or 1,000°C or more, such as 1,100°C or more, or 1,200°C or more, or 1,300°C or more, or 1,400°C or more, or 1,500°C or more, or 1,800°C or more. The hot gas may have a temperature of up to 3,500°C, such as 3,000°C or less, or 2,700°C or less, or 2,500°C or less, or 2,000°C or less, such as 1,900°C or less, or 1,800°C or less, or 1,700°C or less. The hot gas can have a temperature in a range between any of the recited values. The hot gas can for example have a temperature in a range from 800°C to 3,500°C, such as from 1,000°C to 3,000°C, preferably from 1,400°C to 2,700°C, more preferably from 1,800 to 2,500°C.

As mentioned above, by the heat treatment of the zinc containing carbonaceous material at least a part or all of the zinc contained by the carbonaceous material can be transferred into the gas atmosphere. The zinc is thus volatilized. The volatilized zinc can be present in the gas atmosphere e.g. as zinc atoms. The zinc atoms can react with oxygen to form zinc oxide that can be recovered from the gas phase. The heat treatment of the zinc containing carbonaceous material typically also comprises pyrolyzing at least a part of the carbonaceous material. This can promote transfer of the zinc component into the gas phase. Moreover, by the pyrolysis of e.g. organic compounds of the carbonaceous material, such as plastic and/or rubber material, a carbon-based inorganic material such as in particular carbon black can be formed. Alternatively or in addition, carbon black that was already contained in the heat treated zinc containing carbonaceous material as inorganic carbon-based material can be set free by the pyrolysis of the zinc containing carbonaceous material and recovered.

The process as described above can optionally comprise quenching the hot gas to rapidly cool the hot gas atmosphere with the volatilized zinc and/or terminate the pyrolysis reaction and carbon black formation. Quenching can comprise injecting a quenching medium into the hot gas, such as into the hot gas flow. As quenching medium for instance water or an oil can be used.

The process according to the present invention may further comprise depositing a zinc oxide material from the gas atmosphere. Accordingly, at least a part of the zinc contained by the zinc containing carbonaceous material can be recovered in the form of a zinc oxide material. As used herein, "zinc oxide material" means a material that is substantially made of zinc oxide. It can comprise components other than zinc oxide, however, only in minor amounts, such as up to in total 15 wt.% or less, or 10 wt.% or less, or 8 wt.% or less, or 7 wt.% or less, or 6 wt.% or less, or 5 wt.% or less, or 4 wt.% or less, or 3 wt.% or less, or 2 wt.% or less, or 1 wt.% or less. The recovered zinc oxide material can thus for example comprise at least 85 wt.% of zinc oxide, such as 90 wt.% or more, or 92 wt.% or more, or 93 wt.% or more, or 94 wt.% or more, or 95 wt.% or more, or 96 wt.% or more, or 97 wt.% or more, of zinc oxide, based on the total weight of the recovered zinc oxide material. The recovered zinc oxide material can for example comprise 99 wt.% or less, such as 98 wt.% or less, or 97 wt.% or less, or 96 wt.% or less, or 95 wt.% or less, of zinc oxide, based on the total weight of the recovered zinc oxide material. Depositing the zinc oxide material from the gas atmosphere can comprise providing conditions under which zinc oxide condenses from the gas phase. It can comprise contacting the gas atmosphere with a deposition surface or medium exhibiting a lower temperature than the gas atmosphere to deposit the recovered zinc oxide material from said gas phase on said deposition surface or in said deposition medium. The deposition surface can for example comprise a solid surface in the apparatus used for the heat treatment of the zinc containing carbonaceous material, in particular in a zone thereof, which is relatively cool compared to a zone where the zinc containing carbonaceous material is heat treated, or be provided outside of the heat treatment apparatus. The deposition medium can in particular comprise a liquid such as an aqueous medium, particular water, or a molten salt, which can take up zinc oxide. Such liquid can for example be provided in a zone of the apparatus used for the heat treatment of the zinc containing carbonaceous material, that is relatively cool compared to a zone where the zinc containing carbonaceous material is heat treated, or outside of the heat treatment apparatus. Contacting the gas atmosphere with the deposition surface or medium can comprise guiding the gas atmosphere, e.g. hot gas flow, over or towards the deposition surface or medium. The gas atmosphere, e.g. hot gas flow, can also be guided into or through the deposition medium for depositing the recovered zinc oxide material in the deposition medium. The deposition medium can also be injected into the gas atmosphere, such as hot gas flow. The above-mentioned quenching medium can thus for example also serve as deposition medium. The deposition surface or medium can be cooled. The deposition surface or medium should have a temperature that is below the sublimation temperature of zinc oxide. The deposition surface or medium can have a temperature of less than 1,000°C, such as 900°C or less, or 800°C or less, or 700°C or less, or 600°C or less, or 500°C or less, or 400°C or less, or 300°C or less, or 200°C or less, or 100°C or less. The deposition surface or medium can have a temperature of 50°C or more, such as 100°C or more, or 200°C or more, or 300°C or more, or 400°C or more, or 500°C or more, or 600°C or more. The deposition surface or medium can have a temperature in a range between any of the recited values, such as from 50°C to less than 1,000°C, or from 400°C to 900°C, or from 600°C to less than 1,000°C. In one example, for instance a deposition surface having a temperature below 1,000°C, such as from 400°C to less than 1,000°C, or from 600°C to 800°C, can be used for depositing the zinc oxide material from the gas atmosphere. In another example, water or an aqueous medium can be used as deposition medium to deposit the zinc oxide material from the gas atmosphere. The water or aqueous medium used as deposition medium can have a temperature up to its boiling point such as 100°C or less.

The gas atmosphere is typically transported over a distance between the heat treatment of the zinc containing carbonaceous material transferring at least a part of the zinc contained by the carbonaceous material into the gas atmosphere and the depositing of the recovered zinc oxide material from the gas atmosphere. In other words, the heat treatment of the zinc containing carbonaceous material and the deposition of the recovered zinc oxide material can be locally separated from each other, for example in different zones or sites of the apparatus used for heat treating the zinc containing carbonaceous material, or in the apparatus used for heat treating the zinc containing carbonaceous material and outside thereof, respectively. Transport of the gas atmosphere between the different process steps, zones or sites can be achieved by or comprise a gas flow, such as has been described above.

The recovered zinc oxide material deposited from the gas atmosphere may then be retrieved and/or collected, continuously or intermittently, for further use. For instance, the recovered zinc oxide material that has been deposited onto a deposition surface can be removed, continuously or intermittently, from the deposition surface. Any means known in the art to this end can be employed, such as mechanical scraping, blowing, or other techniques. In some cases, such as in vertical reactors, the deposited recovered zinc oxide material may also loosen from the deposition surface and fall by means of gravity to a collection site. Where the recovered zinc oxide material has been deposited in a deposition medium, the medium can continuously or intermittently be retrieved, e.g. from the apparatus for heat treating the zinc containing carbonaceous material and the recovered zinc oxide material be separated therefrom. The deposition medium from which the recovered zinc oxide material has been separated could then be re-used as deposition medium, enabling its use in a cycle.

The process according to the present invention can further comprise retrieving and/or collecting, continuously or intermittently, an inorganic carbon-based material obtainable by the heat treatment of the zinc containing carbonaceous material, as described above, preferably carbon black. This can comprise separating the inorganic carbon-based product material, such as carbon black, from the gas atmosphere, such as after quenching. The carbon black, can be separated from the gas atmosphere, such as after quenching, for example using a bag filter or cyclone separator.

Any zinc containing carbonaceous material as described in detail above can be used as zinc containing carbonaceous feedstock supplied to the reactor in the process for producing carbon black according to the present invention. The term "feedstock" refers to the feedstock for the production of carbon black. In the process according to the present invention in particular a particulate zinc containing carbonaceous feedstock can be used for the production of carbon black. The feedstock can be characterized by its particle size distribution as described above with respect to the zinc containing carbonaceous material. For instance, at least 70 wt.-%, preferably at least 80 wt.-%, more preferably at least 90 wt.-%, most preferably at least 98 wt.-%, of the zinc oxide containing carbon-based feedstock can have a particle size of less than 2 mm, preferably less than 1 mm, more preferably less than 500 µm, and most preferably less than 250 µm, wherein the particle size is measured according to ASTM D 1511-12 (2017). It is preferred that the process for producing carbon black does not utilize a liquid or gaseous feedstock for the production of carbon black. The zinc containing carbonaceous feedstock used in the process for producing carbon black according to the present invention can in particular comprise a scrap material such as an organic scrap material like scrap plastic material and/or scrap rubber material, and/or an inorganic carbon-based scrap material such as used carbon black, as described above. The zinc containing carbonaceous feedstock may comprise a plastic granulate and/or rubber granulate, more preferably rubber granulate made for example from scrap tires and/or other waste rubber as described in detail above. The feedstock may comprise zinc in any form and amount as described above. The zinc can thus be present in the feedstock in elemental form, and/or in bound form, that is bound in zinc compounds and/or salts. Preferably, the zinc component of the feedstock comprises one or more zinc compound and/or zinc salt. The feedstock may comprise zinc in any amount as described above for the zinc containing carbonaceous material. The feedstock may for example comprise zinc in an amount from 0.1 wt.% to 10 wt.%, preferably from 0.3 wt.% to 5.0 wt.%, or from 0.5 to 4.0 wt.%, or from 1.0 wt.% to 3.0 wt.%, based on the total weight of the zinc containing carbonaceous feedstock. The amounts of zinc relate herein to the amount of zinc determined as elemental metal, irrespective of the form in which the zinc is actually present in the zinc containing carbonaceous feedstock.

Pyrolyzing the zinc containing carbonaceous feedstock in a gas atmosphere in the reactor to form and/or recover carbon black and transfer at least part of the zinc contained by the carbonaceous feedstock into the gas atmosphere, can be carried out by a heat treatment as described above in detail with respect to the heat treating of the zinc containing carbonaceous material. The heat treatment may in particular comprise heat treating the zinc containing carbonaceous material at any temperature described above in the context of heat treating the zinc containing carbonaceous material. The feedstock may thus be heat treated for example at a temperature of 1,000°C or more, such as at a temperature in a range from 1,000°C to 3,000°C, preferably 1,400°C to 2,700°C, more preferably 1,800°C to 2,500°C. The heat treatment of the feedstock can be carried out using any of the means and conditions described above in detail with respect to the heat treating of the zinc containing carbonaceous material. The heat treatment can in particular comprise contacting the zinc containing carbonaceous feedstock with a hot gas, such as a hot gas flow. The zinc containing carbonaceous feedstock, such as particulate feedstock, can in particular be injected into the hot gas, particularly hot gas flow. Means for injection of a particulate zinc containing carbonaceous feedstock into a hot gas stream are described further below. A hot gas or hot gas flow can be obtained by for example by electrical heating, plasma heating or combustion of a fuel and oxygen-containing gas as described above. The hot gas or hot gas flow can in particular be produced by combustion of a combustible fuel with an oxygen containing gas. The hot gas or hot gas flow can for example be provided by supplying fuel and oxygen-containing gas into a combustion chamber of the reactor, and combusting fuel in the combustion chamber to produce the hot gas or hot gas flow. The mass flow of the feedstock can be adjusted so that feedstock can be uniformly heated. For instance, the zinc containing carbonaceous feedstock, such as particulate zinc containing carbonaceous feedstock, may be injected into the reactor with a mass flow of 1 to 50 kg/h per 100 L of the reaction volume of the reactor, such as 5 to 40 kg/h per 100 L of the reaction volume of the reactor, or 7 to 30 kg/h per 100 L of the reaction volume of the reactor, and or 8 to 20 kg/h per 100 L of the reaction volume of the reactor.

The process for the production of carbon black can further comprise quenching the hot gas or hot gas flow after contacting with, e.g. injecting, the zinc containing carbonaceous feedstock and before separating the formed carbon black from the gas atmosphere. The quenching can be carried out as described above and can in particular comprise injecting a quenching medium such as water or an oil into the hot gas or hot gas flow.

The carbon black, can be separated from the gas atmosphere, such as after quenching, for example using a bag filter or cyclone separator. Depositing the zinc oxide material from the gas atmosphere can comprise providing conditions, e.g. in a zone or portion of the reactor, under which zinc oxide condenses from the gas phase. As described above this can comprise contacting the gas atmosphere, such as hot gas (flow), with a deposition surface or medium exhibiting a lower temperature than the gas atmosphere to deposit the recovered zinc oxide material from said gas atmosphere, such as hot gas (flow), on said deposition surface or in said deposition medium. The deposition surface can for example comprise a solid surface in the reactor, in particular in a zone thereof, which is relatively cool compared to a zone where the zinc containing carbonaceous feedstock is pyrolyzed. The deposition medium can in particular comprise a liquid such as an aqueous medium, particular water, or a molten salt, which can take up zinc oxide. Such liquid can for example be provided in a zone of the reactor that is relatively cool compared to a zone where the zinc containing carbonaceous feedstock is pyrolyzed. Contacting the gas atmosphere with the deposition surface or medium can comprise guiding the gas atmosphere, e.g. hot gas flow, over or towards the deposition surface or medium. The gas atmosphere, e.g. hot gas flow, can also be guided into or through the deposition medium for depositing the recovered zinc oxide material in the deposition medium. The deposition surface or medium can be cooled. The deposition surface or medium should have a temperature that is below the sublimation temperature of zinc oxide. As described above, the deposition surface or medium can for example have a temperature of less than 1,000°C, such as in a range from 400°C to 900°C, or from 600°C to 800°C, or about 100°C. The process for producing carbon black according to the present invention can comprise any other features as described above such as retrieving and/or collecting the deposited recovered zinc oxide material, continuously or intermittently, from a deposition surface or medium. The process allows advantageously to produce at the same time both, a carbon black product and a recovered zinc oxide material, as sellable valuable products from a single feedstock, which can in contrast to conventional liquid or gaseous feedstocks used to produce carbon black be provided in particulate form, and can in particular allow use of zinc containing carbonaceous scrap material such as rubber from used tires or other waste rubber or waste plastic materials.

The process for the production of carbon black with recovery of zinc oxide material according to the present invention can in particular be carried out in an entrained flow reactor, such as a furnace reactor or a vertical reactor for producing carbon black. These types of reactors are described for example in Industrial Carbon and Graphite Materials: Raw Materials, Production and Applications, 1st edition, 2021, Wiley VCH, vol. II, Chapter 10 "Carbon Black".

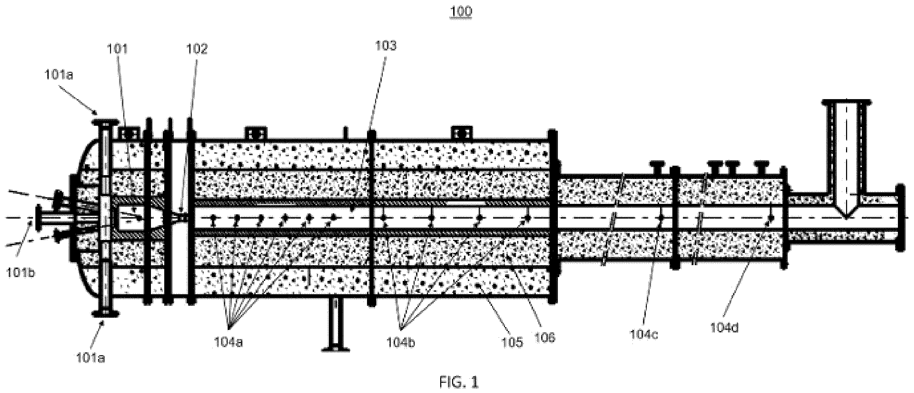

With reference to FIG. 1 a furnace reactor (100) is shown, which comprises in the following order from upstream to downstream (flow direction) a combustion chamber (101), a choke (102) and a tunnel (103). These components define a flow passage along the central longitudinal axis of the reactor for the hot gas flow, such as the hot combustion gases. Thus, the components are in fluid connection, particularly along the central longitudinal axis of the reactor. The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas injection means (101a) and the fuel is injected into the combustion chamber (101) axial via fuel injection means (101b). The oxygen-containing gas (O₂ containing gas or O₂ containing gas mixture) can be air, oxygen-enriched air, other oxygen containing gases and/or pure oxygen. Examples of suitable combustion fuels include e.g., natural gas, fuel oil or other gaseous or liquid hydrocarbons, preferably natural gas or a fuel oil, or H₂. In the combustion chamber (101) the fuel is combusted in the presence of the oxygen-containing gas. The oxygen-containing gas and/or fuel may optionally be preheated e.g. by contacting it with a heat exchanger prior to injection into the combustion chamber as also described above in the context of the process for recovering zinc oxide material. It is possible to adjust the temperature of the hot gas flow resulting from the combustion by such preheating. After the combustion, the temperature of the hot combustion gas may be at any temperature described above for causing pyrolysis of the carbonaceous feedstock and volatilizing zinc contained by the carbonaceous feedstock, such as 1,000°C or more, for example in a range from 1,000°C to 3,000°C, preferably from 1,400°C to 2,700°C, or from 1,800°C to 2,500°C. The temperature can be measured for example with a pyrometer, for instance directly at the location where the feedstock is injected into the hot gas flow.

The combustion chamber is preferably formed of an internal refractory lining covered by a gas tight e.g. metallic covering. The material forming the refractory, and outer lining can be those found conventionally in the art such as the castable refractory Kaocrete^{®} 32-cm which is 70% alumina (Al₂O₃) and has a melting point of about 1870 °C. Additionally, a brick refractory can be relied upon such as RUBY SR (sold by Harrison-Walker Refractories, Pittsburg, PA.) brick refractory which is 84.5% alumina along with 9.8% chromic oxide (Cr₂O₃) and has a melting point of about 2050 °C. The shell or lining is preferably formed of carbon steel except for any piping in contact with hot process air. In those areas, the piping is formed of "316 Stainless Steel". The combustion chamber is preferably dimensioned as a cylinder.

As shown in the Figure, a constricting section (choke) (102) is provided downstream of the combustion chamber. The constriction section can have a tapering passageway and converge in an upstream to downstream direction. Preferably, these constriction sections are in the form of a frustoconical passageway. Further, the tunnel (103) is connected via the choke (102) with the combustion chamber so that the hot combustion gases obtained in the combustion chamber can flow into the tunnel. The tunnel (103) can be arranged along the central longitudinal axis of the reactor. The diameter of the tunnel can be greater than the diameter of the constriction section of the combustion chamber so that the hot combustion gas is able to expand. The expansion section is preferably dimensioned as a cylinder and in communication with the combustion chamber, preferably in communication with the constriction section (choke) of the combustion chamber.

The zinc containing carbonaceous feedstock can be injected into the flow of the hot combustion gas in the combustion chamber (101), in the choke (102), and/or in the tunnel (103) of the furnace reactor. The particulate carbon-containing feedstock is typically injected in the choke (constriction section). The zinc containing carbonaceous feedstock may be injected to the reactor via means to inject the feedstock. The means to inject the feedstock can comprise a plurality of injection nozzles or lances that are preferably arranged circumferentially with respect to the central longitudinal axis. The circumferential arrangement may promote uniform characteristics of the formed carbon black since the feedstock for the carbon black can be homogenously mixed with the hot gas flow. The zinc containing carbonaceous feedstock can be introduced through a plurality of means to inject the feedstock.

For instance, an axially extending feedstock lance and/or radially extending feedstock injectors with nozzles capable of producing a variety of cone shaped sprays (e.g., 15, 30, 45 and 60 degrees cone spray angles) can be used.

The means to inject the feedstock may be connected to a feeding and mixing device, such as a feeding and mixing device described further below. A feeding and mixing device may supply multiple feedstock inlets. However, it is also possible that more than one feeding and mixing device is used.

As shown in Figure 1, the tunnel (103) furthers comprises means for injecting a quenching medium into the flow passage along the central longitudinal axis of the reactor located at multiple positions (104a, 104b, 104c, 104d) along the central longitudinal axis of the reactor. Alternatively, the quenching means can comprise for example a quench boiler or a heat exchanger. By injection of the quench medium, usually water, the temperature of the hot gas flow can be rapidly reduced so that the reaction for forming the carbon black is terminated.

The distance between the feedstock injection means and the means for injecting a quenching medium (the first means for injection a quenching medium) can be between 150 to 80,000 mm, preferably 900 to 50,000 mm, more preferably 1,500 to 30,000 mm, and most preferably 2,500 to 20,000 mm.

The means for injecting a quenching medium can extend into the tunnel. For instance, a cooling fluid conduit or a plurality of radial cooling fluid conduits can be used. The quenching medium, such as a cooling fluid (e.g. water), can be sprayed within the tunnel to stop the carbon black formation reaction at the appropriate time and location.

Accordingly, the position of the used quenching means has an influence on the residence time of the feedstock, i.e. the time between the injection of the feedstock in the reactor and the time of the quench. The residence time of the feedstock provides a measure for the time in that the zinc containing carbonaceous feedstock can be volatilized and pyrolyzed. The residence time is increased if the quench position is adjusted further downstream the reactor. For instance, a quench at a position (104a) near the choke (102) results in a relatively short residence time and a quench at a position (104c) downstream the reactor results in a longer residence time. The quench position should be selected such that there is sufficient time for pyrolysis of the zinc containing carbonaceous feedstock to form and/or recover carbon black and for transferring zinc contained by the carbonaceous feedstock into the gas phase. The residence time may for instance be controlled to be in a range from 150 ms to 4 sec, preferably 200 ms to 3 sec, more preferably 250 ms to 2 sec, and most preferably 250 ms to 1 sec. The residence time may be selected in such a way that organic material in the carbonaceous feedstock is completely pyrolyzed and/or the zinc component contained by the carbonaceous feedstock is completely volatilized.

The formed carbon black can then be separated, after quenching, from the gas stream, for instance by means of a bag filter at the end of the tunnel. Further, zinc oxide material can be deposited from the gas atmosphere, for example by depositing it on a deposition surface or medium that has a suitably low temperature, as described herein. The deposition surface can for instance be provided by a surface that is cooled such as of the above-mentioned quenching means, or that is located in a relatively cool zone of the reactor, e.g. part of the tunnel, or a surface of a dedicated means for deposition of the recovered zinc oxide material provided in or coupled to the reactor, such as a condenser or separator. Alternatively or in addition, a deposition medium, such as the afore-mentioned quench medium could be used for depositing the zinc oxide material from the gas atmosphere. The conditions can accordingly be controlled such that the deposition medium can be present as a liquid in a portion or zone of the reactor or means coupled to the reactor for depositing the zinc oxide material from the gas atmosphere.

In the above-described process preferably a particulate zinc containing carbonaceous material or feedstock is used.

It is particularly preferred that the particulate zinc containing carbonaceous material or feedstock is deagglomerated before heat treatment of the material or injection into the reactor. It is believed that the evaporation can be promoted by using deagglomerated particles.

Accordingly, the processes as described above may further comprise deagglomerating the particulate zinc containing carbonaceous material or feedstock. The deagglomerated particulate zinc containing carbonaceous material or feedstock can then be heat treated or injected in the reactor to form carbon black.

The deagglomeration can be achieved by (i) accelerating the particulate zinc containing carbonaceous material or feedstock, and/or (ii) applying shear forces, preferably using an extruder. The deagglomeration can be carried out in (i) a feeding and mixing device, preferably comprising a nozzle, and/or (ii) an extruder.

Accelerating of the particulate zinc containing carbonaceous material or feedstock can result in the deagglomeration of the particles. For example, a carrier gas, such as N₂ or air, can be accelerated and the particles are injected into the accelerated carrier gas. In other words, the deagglomeration can be carried out by subjecting the particulate zinc containing carbonaceous material or feedstock into a carrier gas jet.

The deagglomeration can be carried out in (i) a feeding and mixing device comprising a Laval nozzle.

The carrier gas and/or the particulate zinc containing carbonaceous material or feedstock is preferably accelerated to over 1 Ma, preferably 1.01 Ma to 1.7 Ma, more preferably 1.1 Ma to 1.6 Ma, and most preferably 1.2 Ma to 1.5 Ma. A Mach number of over 1 can be achieved with a jet nozzle such as a Laval nozzle. Ma is the Mach number. However, flow velocities from 0.01 Ma to 3 Ma, preferably 0.1 Ma to 2 Ma, more preferably 0.2 to 1.8 Ma, and most preferably 0.3 to less than 1 Ma, are also desirable.

A deagglomeration can also be achieved by an impact of the accelerated particulate zinc containing carbonaceous material or feedstock with an object, such as two particles of the particulate carbon-containing feedstock, or by the impact of particles of the particulate zinc containing carbonaceous material or feedstock and a surface such as the inner surface of a deagglomeration conduit.

The deagglomerated particulate carbon-containing feedstock (or the carrier gas comprising the deagglomerated particulate carbon-containing feedstock) can be injected into the reactor or heat treatment apparatus at a pressure from 0.5 bar to 2 bar, preferably 0.7 bar to 1.5 bar, more preferably 0.8 to 1.3 bar, and most preferably 0.8 to 1.2 bar.

The deagglomerated particulate zinc containing carbonaceous material or feedstock can be comprised in a carrier gas and the carrier gas can optionally further comprise H₂O and/or additives. H₂O can prevent the re-agglomeration of the particles in the carrier gas. Thus, the deagglomerated particulate carbon-containing feedstock should be comprised in a carrier gas and the carrier gas can further comprise H₂O in an amount of 1 to 10 vol.-%, preferably 2 to 8 vol.-%, more preferably 3 to 7 vol.-%, based on the total volume of the carrier gas comprising the deagglomerated particulate zinc containing carbonaceous material or feedstock

The deagglomeration can be carried out in a feeding and mixing device for particles into a reactor comprising: (i) a carrier gas passage extending through said feeding and mixing device, (ii) at least one carrier gas inlet, which is in fluid communication with said carrier gas passage, (iii) at least one particle inlet, (iv) a mixing chamber which is in fluid communication with said at least one particle inlet and with said carrier gas inlet, (v) a deagglomeration conduit which is in fluid communication with said mixing chamber, (vi) at least one outlet for said carrier gas entraining particles which have been fed into said mixing chamber, wherein said at least one outlet for is in fluid communication with said deagglomeration conduit, and (vii) means for accelerating and injecting a stream of carrier gas into said mixing chamber.

Said gas passage can extend along a longitudinal axis through said feeding and mixing device and preferably said at least one inlet, said mixing chamber, said deagglomeration conduit and said outlet are aligned with said longitudinal axis.

Said particle inlet may be configured to feed particles into said mixing chamber at an angle relative to a carrier gas jet discharged into said mixing chamber, preferably perpendicularly to the carrier gas jet. However, the angle is not particularly limited for the present invention.

Said means for accelerating and injecting the stream of carrier gas may include at least one jet nozzle (nozzle). The jet nozzle is configurated to accelerate the stream of carrier gas.

Said jet nozzle can be a Laval-nozzle. Such a Laval nozzle (or nozzle) may comprise (in the following order) a convergent section, a throat and a divergent section. Typically, the convergent section reduces the diameter of the nozzle so that the gas flow is accelerated. The divergent section increases the diameter in this section. However, the diameter increased by the divergent section is still lower than the diameter before the convergent section. Accordingly, a nozzle comprising in the following order a convergent section, a throat and a divergent section, the gas flow is accelerated.

It is possible that the means for accelerating and injecting the carrier gas (or nozzle) is positioned in such a way that the means for accelerating and injecting the carrier gas protrudes into the cavity of the inlet funnel of the deagglomeration conduit.

Said deagglomeration conduit may comprise a conduit having a constant inner diameter. In said conduit having a constant inner diameter the particles collide with each other or the particles collide with the wall of the conduit having a constant inner diameter to further deagglomerate. Said deagglomeration conduit can be configured as a diffuser.

Said deagglomeration conduit can comprise from downstream to upstream an inlet funnel, a conduit having a constant inner diameter and a diffuser nozzle diverging in said flow direction. The nozzle for diverging should continuously increase the inner diameter of the deagglomeration conduit. Accordingly, the carrier gas flow is not interrupted and turbulences are avoided. The angle of said diffuser nozzle can be from 1 to 30°, preferably 2 to 20°, more preferably 3 to 15°, and most preferably 4 to 8°. The angle of said inlet funnel can be from 20 to 80°, preferably 30 to 75°, more preferably 40 to 70°, and most preferably 50 to 65°.

The longitudinal axis of said deagglomeration conduit could be coaxial to the longitudinal axis of the feeding and mixing device. The coaxial arrangement improves the overall acceleration as well as deagglomeration.

The inner diameter of the conduit having a constant inner diameter should be higher than the maximum inner diameter of the outlet of the means for accelerating and injecting a stream of the carrier gas.

The means for accelerating and injecting a stream of carrier gas, the mixing chamber and the deagglomeration conduit should be configured so that the carrier gas jet is discharged in the deagglomeration conduit.

The feeding and mixing device can further comprise at least one hopper upstream said at least one particle inlet.

At least one screw conveyor, such as a screw conveyor, may be present upstream of said at least one particle inlet. The screw conveyor may be configured to provide a constant amount of particles (particulate carbon-containing feedstock) into the mixing chamber. Accordingly, the supply of the particles can be controlled by the screw conveyor.

The feeding and mixing device often further comprise a pressure tank for the particles, wherein the pressure tank is in fluid communication with said at least one particle inlet and optionally with said at least one screw conveyor. Preferably two pressure tanks are present, wherein a first pressure tank is connected to a second pressure tank. Both pressure tanks can be connected via a valve.

A feeding and mixing device as described herein can accordingly be used in the processes according to the present invention to provide a (deagglomerated) particulate zinc containing carbonaceous material or feedstock to a heat treatment apparatus or reactor. The feeding and mixing device can be in fluid communication with said heat treatment apparatus or reactor. For instance, the feeding and mixing device may be connected to a plurality of inlets of said reactor, such as injection lances.

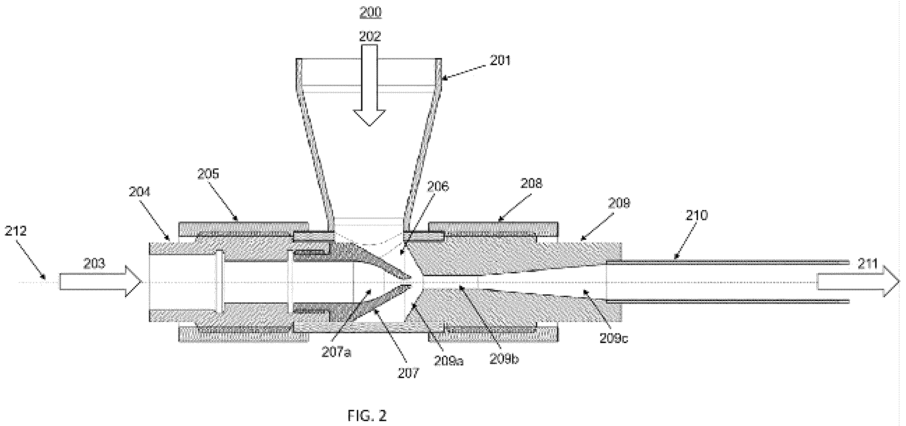

Referring to FIG. 2, an exemplary feeding and mixing device (200) that can be used according to the present invention is shown. The feeding and mixing device comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behaviour into the conduit having a constant inner diameter (209b). The diffuser nozzle diverging in said flow direction (209c) is also beneficial for the flow behaviour. The outlet can be connected to the means for injecting the feedstock into a reactor e.g. according to FIG.1. The feeding and mixing device (200) may comprise a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

Generally, the processes according to the present invention as described above can be conducted as a continuous process, as a semi-batch or as a batch process. In case of a continuous process, zinc containing carbonaceous material can for instance be continuously fed to a heat treatment apparatus, such as a reactor for producing carbon black, where it is heat treated or pyrolyzed according to a process described herein, and recovered zinc oxide material and/or carbon black obtained thereby be continuously withdrawn from the heat treatment apparatus or reactor. In case of a batch or semi-batch operation, a batch of zinc containing carbonaceous material can to be loaded to a heat treatment apparatus, such as a reactor for producing carbon black, where it is heat treated or pyrolyzed according to a process described herein for a desired time under controlled conditions, to produce recovered zinc oxide material and/or carbon black. After the desired time, the production process can be stopped and recovered zinc oxide material and/or carbon black obtained thereby be retrieved from the heat treatment apparatus, e.g. reactor.

The carbon black of the present invention, in particular obtained by the process as described above can comprise newly formed carbon black, recovered carbon black and a mixture or combination thereof. Recovered carbon black can generally be obtained if the zinc containing carbonaceous feedstock comprises carbon black, such as in case of a rubber or plastic material comprising carbon black filler. New carbon black may in particular be formed by pyrolysis from organic compounds, such as rubber or plastic material, in the process of the present invention.

The carbon black of the present invention and specifically obtainable by the process as described above, can be used as such or optionally be subjected to further processing before use. The carbon black, preferably obtained by a process according to the present invention can thus be subjected to any further processing that may be used in the art for processing such solid materials, such as for example, without being limited thereto, drying, milling, classifying, pelletizing, forming, purification or chemical modification. It has though been found that that the carbon black preferably obtained by the process as described above does not need to be purified, but can be used without purification at least in some applications such as in vulcanizable rubber compositions.

The carbon blacks according to the present invention, can be used in any application, where carbon blacks are commonly used.

The present invention also relates to use of the carbon black according to the present invention as reinforcing filler or additives, UV stabilizer, conductive carbon black or pigment.

Furthermore, the present invention relates to use of the carbon black according to the present invention in rubber, plastics, inks such as printing inks, inkjet inks or other inks, toners, lacquers, coatings, papers, batteries or black matrix applications.

The invention further relates to a rubber composition. The rubber composition comprises (a) a rubber material and (b) a carbon black material comprising the carbon black according to the present invention.

The terms "rubber material" and "rubber" and "elastomer" may be used interchangeably throughout this description unless otherwise stated. Rubbers that can be used according to the present invention include those containing olefinic unsaturation, i.e., diene-based rubber materials, as well as non-diene-based rubber materials. The term "diene-based rubber materials" is intended to include both natural and synthetic rubbers or mixtures thereof. According to the present invention the rubber material may comprise natural rubber and/or synthetic rubber such as styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or a mixture or combination of any of the foregoing. Preferably, the rubber material may comprise natural rubber, styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), butyl rubber, halogenated butyl rubber or a mixture or combination of any of the foregoing.

Natural rubber can be used in its raw form and in various processed forms conventionally known in the art of rubber processing. Natural rubber can for example be obtained from rubber trees (Helvea brasiliensis), guayule, and dandelion.

According to the invention, the synthetic rubber can also be obtained from a renewable source material. For example, polybutadiene can be produced from alcohol obtained through fermentation of plant biomass. Suitable preparation of alcohol obtained through fermentation and preparation of polybutadiene from such alcohol is described in EP 2 868 697 A1.

The rubber composition according to the present invention may comprise at least 2 phr of the carbon black material (b), such as at least 5 phr, or at least 7 phr, or at least 10 phr, or at least 15 phr, or at least 20 phr, or at least 25 phr, or at least 30 phr. As used herein, the term "phr" refers to parts by weight of the recited respective material per 100 parts by weight of rubber or elastomer. The rubber composition according to the present invention may comprise 200 phr or less of the carbon black material (b), such as 175 phr or less, or 150 phr or less, or 100 phr or less, or 70 phr or less. A person skilled in the art will appreciate that any range between any of the explicitly disclosed lower and upper limit is herein disclosed. Accordingly, the rubber composition according to the present invention may comprise 2 to 200 phr of the carbon black material (b), preferably 7 to 175 phr, more preferably 10 to 150 phr, even more preferably 20 to 100 phr, most preferably 30 to 70 phr.

According to the present invention, the carbon black material (b) may comprise at least 5 wt.-% of the carbon black according to the present invention as described above, such as at least 7 wt.-%, or at least 10 wt.-%, wherein the wt.-% is based on the total weight of the carbon black material (b). According to the present invention, the carbon black material (b) may comprise 100 wt.-% or less of the carbon black according to the present invention as described above, such as 75 wt.-% or less, or 50 wt.-% or less, or 25 wt.-% or less, or 20 wt.-% or less, wherein the wt.-% is based on the total weight of the carbon black material (b). A person skilled in the art will appreciate that any range between any of the explicitly disclosed lower and upper limit is herein disclosed. Accordingly, the carbon black material (b) may comprise 5 to 100 wt.-%, preferably 5 to 50 wt.-%, more preferably 5 to 25 wt.-%, most preferably 10 to 20 wt.-% of the carbon black according to the present invention as described above, wherein the wt.-% is based on the total weight of the carbon black material (b).

According to the present invention, the carbon black material (b) may comprise further carbon black different from the carbon black according to the present invention as described above, such as virgin carbon black. According to the present invention, the carbon black material (b) may further comprise virgin carbon black. As used herein, the term "virgin carbon black" refers to carbon black produced from oil, coal, other fossil-fuel derived feedstock, tire pyrolysis oil or renewable carbon black feedstock by an industrial process such as furnace process, gas black process, acetylene black process, thermal black process or lamp black process. The production of carbon blacks is per se well known in the art and for example outlined in J.-B. Donnet et al., "Carbon Black: Science and Technology", 2nd edition as well as in H. Ferch "Pigmentruße", 1st edition, Curt R. Vincentz Verlag, Hannover (1995) and will be further described below. Different industrial processes for the production of carbon blacks are available and include, e.g., the furnace process, gas black process, acetylene black process, thermal black process or lamp black process, as for example described in J.-B. Donnet et al., "Carbon Black: Science and Technology", 2nd edition. Renewable carbon feedstock may comprise a plant-based feedstock, such as woods, grass, cellulose, hemicellulose, lignin, waste material comprising natural rubber and/or synthetic rubber obtained from a renewable source material, black liquor, tall oil, rubber seed oil, tobacco seed oil, castor oil, pongamia oil, crambe oil, neem oil, apricot kernel oil, rice bran oil, cashew nut shell oil, cyperus esculentus oil, cooking oil, distillation residues from biodiesel plants or a mixture or combination of any of the foregoing.

According to the present invention, the carbon black material (b) may comprise may comprise 95 wt.-% or less of virgin carbon black, such as 93 wt.-% or less, or 90 wt.-% or less, wherein the wt.-% is based on the total weight of the carbon black material (b). According to the present invention, the carbon black material (b) may comprise at least 25 wt.-% of virgin carbon black, such as 50 wt.-%, or at least 75 wt.-%, or at least 80 wt.-%, wherein the wt.-% is based on the total weight of the carbon black material (b). A person skilled in the art will appreciate that any range between any of the explicitly disclosed lower and upper limit is herein disclosed. Accordingly, the carbon black material (b) may comprise 50 to 95 wt.-%, preferably 75 to 95 wt.-%, most preferably 80 to 90 wt.-%, of virgin carbon black according to the present invention as described above, wherein the wt.-% is based on the total weight of the carbon black material (b).

The rubber composition according to the invention may further comprise one or more other additives commonly used in the art of formulation. Such additives include, for example, curing aids such as primary and secondary vulcanization accelerators, activators, and pre-vulcanization inhibitors, processing additives such as oils, waxes, resins, plasticizers, softeners, or rheology modifiers, pigments, peptizing agents, coupling agents, surfactants, biocides and anti-degradants such as heat or light stabilizers, antioxidants and anti-ozonants. The person skilled in the art will select such optional additives and their respective amounts in accordance with the desired properties and/or application of the polymeric composition. Useful as primary and secondary vulcanization accelerators are for example guanidines, dicarbamates, dithiocarbamates, thiurams, thioureas, 2-mercaptobenzothiazole, benzothiazole sulfonamides, aldehydeamines, amines, disulfides, thiazoles, xanthates, and sulfenamides. As specific examples it may be referred for instance to N-tert-butyl-2-benzothiazyl sulfenamide commercially available under the tradename Rhenogran TBBS-80 from Rhein Chemie Additives. Suitable vulcanization activators that can be used in the composition according to the present invention include for example combinations of zinc oxide or the like with a fatty acid like stearic, lauric, palmitic, oleic or naphthenic acid. If used, such activators are typically employed in amounts of 1 to 10 phr, such as 2 to 5 phr.

Further additives may include metal oxides, metal hydroxides and filler materials such as metal oxides, metal hydroxides, and filler materials such as silica, preferably precipitated and fumed silicas, organo-silica, carbon nanotubes, carbon fibers, graphite and metal fibers as well as organosilanes, such as bis(trialkoxysilylalkyl) oligo- or polysulfide.

The rubber composition of the present invention can be obtained and processed by common elastomer processing technology. The rubber composition can for example be obtained by combining the carbon black material (b) and any optional ingredients, if used, with the rubber material (a) and mixing the same, e.g. to disperse the carbon black material (b) and any optional ingredients, if used, in the rubber material (a). Dispersion can be achieved by any means known in the art such as by mixing, stirring, milling, kneading, ultrasound, a dissolver, a shaker mixer, rotor-stator dispersing assemblies, or high-pressure homogenizers or a combination thereof. For example, a lab mixer with intermeshing rotor geometry can be used. The dispersing can for example be conducted until the carbon black material (b) is homogeneously dispersed in the rubber material (a) resulting in a dispersion index of larger than 95% or more, preferably 97% or more, or more than 99% according to the classification pursuant to ASTM D2663-88, test method B.

Preparation of the rubber composition may for example be conducted in a multiple step process: At first, the carbon black material (b) and optionally non-curative additives, if used, may be added to the rubber material (a) concomitantly or successively. The rubber material (a), the carbon black material (b) and the additives, if used, may then be mixed, typically at a temperature in a range from 40°C to 160°C for a total mixing time of less than 10 min, such as in a range from 2 to 8 min. Subsequently, the obtained mixture may be blended with one or more curative additives for less than 5 min, typically less than 3 min, preferably for about 2.5 min, at a temperature of less than 115°C.

The process can comprise further steps such as extrusion or cooling down the product to room temperature and storing it for further processing. The process can further comprise a curing step, which can for example be carried out by subjecting the composition to thermal curing conditions, e.g., a temperature of 120-200°C for a time of 5 minutes to 3 hours. Curing can for instance be carried out in a curing press for example at a temperature of 140-180°C for 5 to 60 minutes at a pressure between 100 and 150 bar.

As it will be appreciated, the rubber composition can be utilized in various technical applications requiring polymer-based materials with carbon black filler, e.g. for imparting antistatic or electrically conductive properties, color, mechanical reinforcement and/or low hysteresis properties. Mechanical properties that are of interest, particularly for the production of tires, include tear resistance, rebound and hysteresis. The rubber compositions provide cured compositions which have good and beneficial mechanical properties, especially for the production of tires. The composition according to the present invention provide cured compositions having mechanical properties which are comparable to rubber compositions comprising conventional carbon blacks such as virgin carbon blacks.

Accordingly, the invention also relates to tires made of the afore-mentioned rubber composition according to the invention. The tire according to the present invention may a tire tread, a belt, a belt reinforcement, a carcass, a carcass reinforcement, a sidewall, inner liner, apex, shoulder, hump strip, chafer and a bead filler, wherein at least one of the foregoing is made of the rubber composition according to the invention as described above. Such tires include for example, without being limited thereto, truck tires, passenger tires, off-road tires, aircraft tires, agricultural tires, and earth-mover tires.

The tire according to the present invention may comprise a sidewall, wherein the sidewall is made of the rubber composition according to the present invention. Preferably, the rubber composition of the sidewall comprises: (a) from 30 to 70 phr of natural rubber and from 30 to 70 phr of synthetic rubber, preferably from 40 to 60 phr of natural rubber and from 40 to 60 phr of synthetic rubber, more preferably from 50 to 60 phr of natural rubber and from 40 to 50 phr of synthetic rubber wherein the synthetic rubber preferably comprises polybutadiene, more preferably consists of polybutadiene; and (b) from 30 to 70 phr of the carbon black material, preferably from 40 to 60 phr of the carbon black material, preferably 50 phr of the carbon black material.

The tire according to the present invention may comprise a carcass, wherein the carcass is made of the rubber composition according to the present invention. Preferably, the rubber composition of the carcass comprises: (a) from 40 to 80 phr of natural rubber and from 20 to 60 phr of synthetic rubber, preferably from 50 to 70 phr of natural rubber and from 30 to 50 phr of synthetic rubber, more preferably 60 phr of natural rubber and from 40 phr of synthetic rubber wherein the synthetic rubber preferably comprises polybutadiene and emulsion-styrene-butadiene rubber (ESBR), more preferably comprises 20 phr of polybutadiene and 20 phr of emulsion-styrene-butadiene rubber (ESBR); and (b) from 30 to 70 phr of the carbon black material, preferably from 40 to 60 phr of the carbon black material, more preferably 50 phr of the carbon black material.

The tire according to the present invention may comprise a chafer, wherein the chafer is made of the rubber composition according to the present invention. Preferably, the rubber composition of the chafer comprises: (a) from 30 to 70 phr of natural rubber and from 30 to 70 phr of synthetic rubber, preferably from 40 to 60 phr of natural rubber and from 40 to 60 phr of synthetic rubber, more preferably 50 phr of natural rubber and 50 phr of synthetic rubber, wherein the synthetic rubber preferably comprises emulsion-styrene-butadiene rubber (ESBR), more preferably consists of emulsion-styrene-butadiene rubber (ESBR); and (b) from 55 to 95 phr of the carbon black material, preferably from 65 to 85 phr of the carbon black material, preferably 75 phr of the carbon black material.

The tire according to the present invention may comprise a bead filler and/or an apex, wherein the bead filler and/or an apex is made of the rubber composition according to the present invention. Preferably, the rubber composition of the bead filler and/or an apex comprises: (a) from 80 to 100 phr of natural rubber, preferably from 90 to 100 phr of natural rubber, more preferably 100 phr of natural rubber; and (b) from 35 to 75 phr of the carbon black material, preferably from 45 to 65 phr of the carbon black material, more preferably from 55 phr of the carbon black material.

The tire according to the present invention may comprise an inner liner, wherein the inner liner is made of the rubber composition according to the present invention. Preferably, the rubber composition of the inner liner comprises: (a) from 80 to 100 phr of synthetic rubber, preferably from 90 to 100 phr of synthetic rubber, more preferably 100 phr of synthetic rubber, wherein the synthetic rubber preferably comprises a halogenated butyl rubber, more preferably consists of a halogenated butyl rubber; and (b) from 15 to 80 phr of the carbon black material, preferably from 30 to 70 phr of the carbon black material, more preferably from 50 to 70 phr of the carbon black material.

The tire according to the present invention may comprise a tread, preferably a truck tread, wherein the tread, preferably a truck tread is made of the rubber composition according to the present invention. Preferably, the rubber composition of the tread, preferably a truck tread comprises: (a) from 60 to 95 phr of natural rubber and from 5 to 40 phr of synthetic rubber, preferably from 70 to 85 phr of natural rubber and from 15 to 30 phr of synthetic rubber, more preferably from 80 phr of natural rubber and 20 phr of synthetic rubber, wherein the synthetic rubber preferably comprises polybutadiene, more preferably consists of polybutadiene; and (b) from 30 to 70 phr of the carbon black material, preferably from 40 to 60 phr of the carbon black material, more preferably from 50 phr of the carbon black material.

The tire according to the present invention may comprise a tread, preferably a passenger car tire tread, wherein the tread, preferably a passenger car tire tread is made of the rubber composition according to the present invention. Preferably, the rubber composition of the tread, preferably a passenger car tire tread comprises: (a) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene; and (b) from 35 to 75 phr of the carbon black material, preferably from 45 to 65 phr of the carbon black material, more preferably 55 phr of the carbon black material.

The tire according to the present invention may comprise a tread, preferably a passenger car tire tread, wherein the tread, preferably a passenger car tire tread is made of the rubber composition according to the present invention. Preferably, the rubber composition of the tread, preferably a passenger car tire tread comprises: (a) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene; (b) from 3 to 25 phr of the carbon black material, preferably from 5 to 15 phr of the carbon black material, more preferably 5 phr of the carbon black material; and (c) from 60 to 100 phr of silica, preferably from 70 to 90 phr of silica, more preferably 80 phr of silica.

The tire according to the present invention may comprise a tread, preferably an Off-the-road (OTR) tire tread, wherein the tread, preferably an Off-the-road (OTR) tire tread is made of the rubber composition according to the present invention. Preferably, the rubber composition of the tread, preferably an Off-the-road (OTR) tire tread comprises: (a) from 80 to 100 phr of natural rubber, preferably from 90 to 100 phr of natural rubber, more preferably 100 phr of natural rubber; and (b) from 35 to 75 phr of the carbon black material, preferably from 45 to 75 phr of the carbon black material, more preferably from 55 phr of the carbon black material.

The tire according to the present invention may have a circumferential tread of a cap/base configuration comprising a circumferential outer tread cap rubber layer which contains a running surface for the tire and a tread base rubber layer at least partially underlaying said tread cap rubber layer, wherein at least one of said tread cap rubber layer and said tread base rubber layer is made of the rubber composition according to the invention as described above.

The present invention further relates to an article made of the rubber composition according to the invention as described above being a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

The article according to the present invention may be a conveyor belt, wherein the conveyor belt is made of the rubber composition according to the present invention. Preferably, the rubber composition of the conveyor belt comprises: (a) from 60 to 95 phr of natural rubber and from 5 to 40 phr of synthetic rubber, preferably from 70 to 85 phr of natural rubber and from 15 to 30 phr of synthetic rubber, more preferably 80 phr of natural rubber and from 20 phr of synthetic rubber, wherein the synthetic rubber preferably comprises polybutadiene, more preferably consists of polybutadiene; and (b) from 30 to 70 phr of the carbon black material, preferably from 40 to 60 phr of the carbon black material, more preferably from 50 phr of the carbon black material.

The article according to the present invention may be a hose, wherein the hose is made of the rubber composition according to the present invention. Preferably, the rubber composition of the hose comprises: (a) natural rubber, emulsion-styrene-butadiene rubber (ESBR), polybutadiene, ethylene-propylene-diene rubber (EPDM), acrylonitrile-butadiene rubber, chlorosulfonated polyethylene, fluorocarbon rubber or a mixture or combination of any of the foregoing; and (b) from 30 to 100 phr of the carbon black material.

The present invention further relates to use of the aforementioned rubber composition according to the present invention for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

Furthermore, the present invention further relates to a plastic composition comprising a thermoplastic polymer, a thermosetting polymer, a thermoplastic elastomer, preferably low and high density polyethylene and polypropylene, polyvinyl chloride, melamine-formaldehyde resin, phenolic resin, epoxy resin, polyamide, polyester, polyoxymethylene, polymethyl methacrylate, polycarbonate, polystyrene, polyurethane, polyphenylene oxide, polysiloxane, polyacryloamide, polyaryletherketone, polysulfone, polyetherimide, acrylonitrile styrene acrylate or acrylonitrile butadiene styrene polymer and mixtures or co-polymers of any of the foregoing.

### EXAM PLES

All parts and percentages mentioned herein are based on weight, unless indicated otherwise.

### Zinc containing carbonaceous scrap material

Rubber granulate, commercially available from ESTATO Umweltservice GmbH (ESTATO), Germany as Gummigranulat 0.0 - 0.5 mm (Article Nr. 005GUM), was used as zinc containing carbonaceous feedstock for the recovery of zinc oxide and the production of carbon black as described herein below. The rubber granulate is a scrap material derived from end-of-life tires and comprises synthetic rubber (SBR) and natural rubber (NR). The particle size distribution of the rubber granulate, measured according to ASTM D 1511-12 (2017), is shown in Table 1 below. The weight average particle diameter (Dw50) measured according to ASTM D 1511-12 (2017), is about 400 µm.

**Table 1:**

| | |
|---|---|
| Particle fraction < 0.125 mm | 2.0 wt.-% |
| Particle fraction 0.125 - 0.25 mm | 9.6 wt.-% |
| Particle fraction 0.2 5 - 0.50 mm | 34.5 wt.-% |
| Particle fraction 0.50 - 1.0 mm | 45.1 wt.-% |
| Particle fraction 1.0 - 2.0 mm | 8.8 wt.-% |
| Particle fraction > 2.0 mm | 0.0 wt.-% |

The chemical composition of the used rubber granulate was analyzed as follows. The carbon mass fraction, hydrogen fraction mass, nitrogen mass fraction, oxygen mass fraction, and sulfur mass fraction were measured using an elemental analyzer with thermal conductivity and infrared detector (vario EL cube CHNS from Elementar), as also described further below with respect to analysis of the zinc oxide material. Furthermore, the zinc content was measured by inductively coupled plasma - optical emission spectrometry (ICP OES). A pressure-assisted microwave digestion was carried out before for instance by using a micro-wave and nitric acid. The measurements were carried out according to ASTM D8371-20. Table 2 summarizes properties of the used rubber granulate in terms of its determined chemical composition. Zinc is present, presumably in the form of zinc salts and/or compounds, originating from zinc containing ingredients in the rubber composition used to prepare the tires.

**Table 2:**

| Property | Value |
|---|---|
| Carbon mass fraction | 77.99 wt.% |
| Hydrogen mass fraction | 7.13wt.% |
| Nitrogen mass fraction | 0.41 wt.% |
| Sulphur mass fraction | 1.73 wt.% |
| Oxygen mass fraction | 2.49 wt.% |
| Zinc mass fraction | 1.7 wt.% |
| Other | balance |

### Carbon black production

The above-described rubber granulate was used as a feedstock material for the production of carbon black in a small-scale furnace reactor as shown in FIG. 1.

The furnace reactor (100) comprises a combustion chamber (101), a choke (102) and a tunnel (103) arranged along a longitudinal main axis. In the combustion chamber (101) fuel is combusted in the presence of the oxygen-containing gas. The combustion chamber accordingly comprises means to inject a fuel (101b) and oxygen-containing gas (101a). Natural gas was used as fuel and air as oxygen-containing gas, which was preheated prior to injection into the combustion chamber by contacting it with a heat exchanger. The temperature in the combustion chamber, i.e. the temperature of the hot combustion gases, as measurable with a pyrometer, was controlled by the relative amounts of the gas flows of fuel and oxygen (k value) and the temperature of the combustion air upstream the combustion chamber. The combustion chamber narrows conically towards the choke as the narrowest section. In the used small-scale furnace reactor, the choke reduces the diameter to 45 mm. The rubber granulate was injected into the hot combustion gas in the furnace reactor in the choke via a feeding and mixing device having a nozzle as shown in FIG. 2, and described in the general specification above, using nitrogen as a carrier gas. The hot combustion gas heats the particulate carbon-containing feedstock for pyrolysis thereof. Downstream of the choke a reactor tunnel is mounted having a diameter of 200 mm and has a length of 4200 mm, wherein the pyrolysis of the feedstock and formation and/or recovery of carbon black from the feedstock proceed. The furnace reactor (100) further comprises means for the injection of a quench medium (104a, 104b, 104c, 104d). Water was used as quench medium and injected through a means for the injection of a quench medium so that the reactions are terminated. The reaction volume of the reactor was about 130 liters. The reaction volume was the volume of the reactor between the position of the injection of the feedstock and the used position of the quench. Table 3 summarizes the applied reaction conditions.

**Table 3:**

| | |
|---|---|
| Combustion Air Flow (STP)¹ / m³/h | 2,300 |
| Temperature of combustion air / °C | 715 |
| Fuel (natural gas) Flow (STP) / m³/h | 213 |
| k value² | 0.898 |
| Nitrogen purge flow (STP) / m³/h | 472 |
| Feedstock (rubber granulate) mass flow / kg/h | 318 |
| Temperature of the hot gas flow / °C | approx. 2,000 |

| | |
|---|---|
| ¹273.15 K and 101325 Pa ²The k value is defined by the ratio of stoichiometric O₂ amount that is necessary for the complete stoichiometric combustion of the fuel to the supplied O₂ amount. | |

The thus formed carbon black was collected at the outlet of the tunnel of the reactor and the chemical composition of the carbon black was analyzed. The carbon mass fraction, hydrogen mass fraction, nitrogen mass fraction, oxygen mass fraction, and sulfur mass fraction were measured using an elemental analyzer with thermal conductivity and infrared detector (vario EL cube CHNS from Elementar) and are displayed in Table 4. The mass fraction analysis is determined by means of elemental analysis in accordance with DIN 51732:2014.

**Table 4:**

| Property | Value |
|---|---|
| Carbon mass fraction | 79.50 wt.% |
| Hydroqen mass fraction | 0.19 wt.% |
| Nitrogen mass fraction | 0.16 wt. % |
| Sulphur mass fraction | 2.12 wt.% |
| Oxygen mass fraction | 2.19 wt.% |
| Other | balance |

The properties of the thus prepared carbon black (CB) are compared with a virgin carbon black (vCB) being CORAX^{®} N660, commercially available from Orion Engineered Carbons GmbH (Germany) and a recovered carbon black (rCB) being RCB 615 commercially available from Reoil Sp. Z o.o. (Poland). The properties of the carbon blacks are determined in accordance with the following standards (Table 5) and are listed in Table 6.

**Table 5:**

| Property | Standard |
|---|---|
| OAN | ASTM D2414-22 |
| BET/STSA | ASTM D6556-21 |
| Ash content | ASTM D1506-15 at 550 °C, 16 h |
| Transmittance value at 425 nm | ASTM D1618-23 |

**Table 6:**

| | CB | vCB | rCB |
|---|---|---|---|
| OAN [mL/100g] | 72 | 90 | 97 |
| BET [M²/g] | 70 | 35 | 71 |
| STSA [m²/g] | 70 | 34 | 59 |
| Ash content [wt.-%] | 19.3 | < 0.5 | 23.7 |
| Transmittance value at 425 nm [%] | 90.5 | > 80 | 84.4 |
| d95 value [µm] | 9.96 | | |

The d95 value was determined by dry measurement using laser diffraction. The measurement system from Sympatec GmbH (Germany) was used consisting of VIBRI: conveyor unit (by vibration); RODOS: compressed air dispersion; and HELOS BR: measuring unit, laser diffraction. As sample preparation, 0.5 g of the dried material (dried at 125°C for 1 hour) was filled into the funnel. During the measurement, the sample was fed with the VIBRI unit to the compressed air dispersion unit RODOS by vibration. Measurement was accomplished in HELOS BR unit using laser diffraction. OPTICAL concentration (copt) was automatically filtered between 5-15% during the measurement. Three separate measurements of 10 sec using each time 0.5 g of the material were recorded. Before each measurement, a background measurement of 15 sec was recorded to minimize noise. The obscuration range was controlled by the feeding rate with automatic adjustment and the hopper gap (1.5 mm) in the range of 5-15% using an integral factor of 0.2. The dispersing air pressure was set to 3 bar. Reported values (volume distribution) represent the average of three measurements after the data analysis using the Fraunhofer Enhanced Evaluation (FREE) in the instrument software.

The volume resistivity of the respective carbon blacks was determined as follows. Emulsion-styrene-butadiene rubber (ESBR) containing 50 phr of the carbon black set forth in Table 7 below was prepared according to the following procedure.

**Table 7**

| | CB | vCB | rCB |
|---|---|---|---|
| | phr | phr | phr |
| ESBR¹ | 100 | 100 | 100 |
| Carbon black | 50 | 50 | 50 |
| ZnO² | 3 | 3 | 3 |
| Stearic Acid³ | 2 | 2 | 2 |
| 6PPD⁴ | 1 | 1 | 1 |
| Sulphur⁵ | 1.5 | 1.5 | 1.5 |
| CBS⁶ | 1.5 | 1.5 | 1.5 |

| | | | |
|---|---|---|---|
| ¹Rubber ESBR, Buna SB 1500, Resinex Deutschland GmbH ²ZnO, Zinc Oxide HP Grade, Oquema GmbH ³Stearic Acid, Palmera B 1804, Caldic Deutschland GmbH ⁴6PPD, VULKANOX 4020/LG, Brenntag GmbH ⁵Sulphur, MAHLSCHWEFEL 80/90° unbeölt, Avokal GmbH ⁶CBS, VULKACIT CZ/EG-C, Lanxess N.V. | | | |

### Preparation of vulcanizable rubber compositions

The ESBR rubber was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the respective carbon black volume, the ZnO material and stearic acid were added under milling. After 60 seconds the other half of the respective carbon black volume and the 6PPD were added. After further 120 secs the ram was lifted and cleaned, and the batch was mixed for another 90 seconds. The total mixing time in the internal mixer was 5 minutes and afterwards the batch was dropped on an open mill for cooling down and additional distributive mixing. The two roll laboratory mill from company Troester was set to a roll temperature of 40 °C. The front roll was operated at 23 rpm and the back roll at 34 rpm. The compound was cut three times left and three times right and the 6 times rolled, turned 90 ° and transferred again through the nip. The batch temperature did not exceed 160°C in the first mixing step. The batch was allowed to rest overnight.

During the second and final mixing step the sulphur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The two roll laboratory mill from company Troester was set to a roll temperature of 40 °C. The front roll was operated at 23 rpm and the back roll at 34 rpm. The compound was cut three times left and three times right and the 6 times rolled, turned 90 ° and transferred again through the nip.

### Curing of the vulcanizable rubber compositions

The prepared vulcanizable rubber compositions according to Table 7 were subjected to curing in a cure press at a temperature of 165°C. The applied pressure was 130 bar. The cure kinetics were analyzed with a moving die rheometer Alpha Technologies Rheometer MDR 2000 at 165 °C and then the cure times were defined for the different compounds to assure optimized cure state. The vulcanizable rubber compositions were cured in the cure press for a time, which allowed to reach the maximum torque in the respective measured torque-time curve to ensure full cure. The vCB compound was cured for 11 min, the rCB compound was cured for 13 min and the CB compound was cured for 10 min after allowing the compounds to rest overnight. Respective vulcanizate sheets having a thickness of around 2 mm were provided.

### Measuring the volume resistivity

The volume resistivity of the carbon blacks was determined in the thus prepared and cured emulsion-styrene-butadiene rubber (ESBR) containing 50 phr carbon black based on DIN EN ISO 3915:2022 using a resistance meter with a high Ohm measurement electrode and a high Ohm shield chamber (Milli-TO3 (H.-P. Fischer Elektronik GmbH & Co. Industrie- und Labortechnik KG (Germany) with the guard ring electrode FE-50 (H.-P. Fischer Elektronik GmbH & Co. Industrie- und Labortechnik KG (Germany) and the shield chamber TOM 300-2 (H.-P. Fischer Elektronik GmbH & Co. Industrie- und Labortechnik KG (Germany)).

The specimens were punched out of the respective vulcanizate sheets (having a thickness of around 2 mm) using a circular blade having a diameter of 82 mm. The respective specimens having a diameter of 82 mm and a thickness of around 2 mm were degreased with isopropyl alcohol. The thickness of the respective specimen was measured to an accuracy of 0.01 mm at several points using a thickness gauge having a diameter of 30 mm. The average sample thickness was used to calculate the volume resistivity.

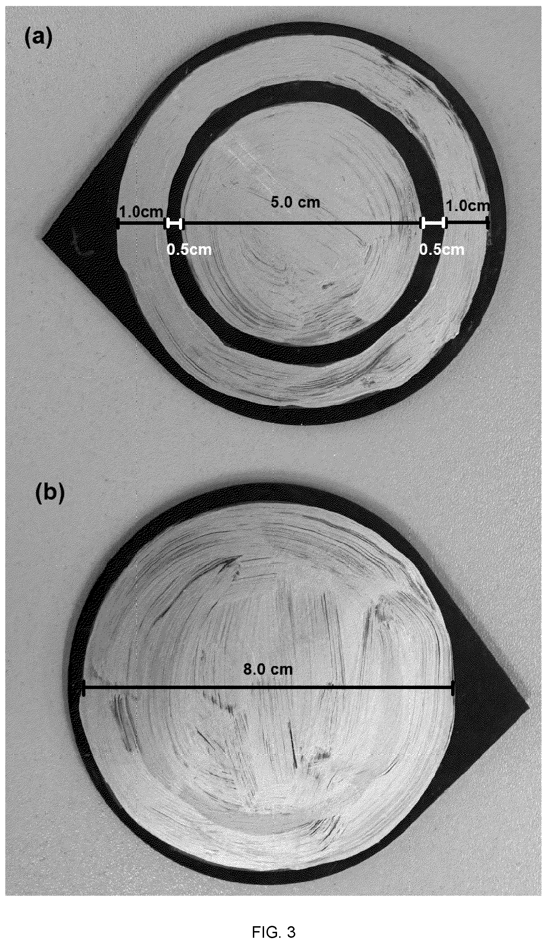

The respective specimens were coated with conductive silver (LS200N Silberleitlack (Hans Wolbring GmbH (Germany)) according to the dimensions of the FE-50 electrode. An area with a diameter of around 8.0 cm on the underside of the respective specimen was coated with the conductive silver (see Fig. 3 (b)). An area with a diameter of around 5.0 cm on the top of the respective specimen was coated with the conductive silver, an area of around 0.5 cm around the coated area (diameter of around 5.0 cm) was left blank and a further area of around 1 cm around the blank area was coated again with the conductive silver (see Fig. 3 (a)). After the conductive silver was applied, the respective specimen was dried for 24 hours. The respective specimen was placed in the measuring electrode device with the underside of the specimen facing downwards and volume resistivity of the respective specimen was measured at 100 V. The volume resistivities of the respective carbon blacks is displayed in Table 8.

**Table 8:**

| | CB | vCB | rCB |
|---|---|---|---|
| Volume resistivity [Ω·cm] | 8.0-105 | 9.3·10¹² | 1.7·10¹⁴ |

The thus prepared cured rubber compositions were further characterized moreover investigated for their properties.

Hardness was measured according to DIN 53 505.

Tensile strength, elongation at break and Modulus 300 were measured according to ISO 37 - 2012, S2.

Topography relative peak area as a measure for filler dispersion was determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Füllstoffdispersion in Gummimischungen mittels einer Oberflachentopographie", Thesis, 1998 at the Münster University of Applied Sciences, and DE 199 17975 C2.

The loss factor tan(d) and complex modulus E* were measured according to DIN 53 513 in strain-controlled mode (1 ± 0.5 mm) or force-controlled mode (50 N ± 25 N) on a cylindrical specimen (10 mm in height and 10 mm in diameter) at 60°C with a frequency of 16 Hz.

Heat build-up was tested according to DIN 53533 applying a pre-tension of 1 MPa and a stroke of 4.45 mm. The chamber temperature is 55 °C.

Tear Resistance was measured according to DIN ISO 34-1:2016-09, method B, variant (b).

DIN abrasion (in mm³) was measured according to DIN 53 516 with a force of 10N, at 23°C.

Compression set was determined according to ISO 815:1-2019.

MDR 165 °C - TC95% was determined as the time to 95% cure from the measurement of the torque as a function of the time at the used curing temperature of 165°C. A moving die rheometer Alpha Technologies Rheometer MDR 2000 was used.

The results of the properties determined for the cured rubber compositions according to Examples 1 and 2 are summarized in Table 9 below.

**Table 9:**

| Property | Unit | CB | vCB | rCB |
|---|---|---|---|---|
| TOPO dispersion - defect area | % | 10.2 | 0.6 | 16.5 |
| Hardness | Shore A | 59 | 61 | 59 |
| Tensile strength | MPa | 22.4 | 20.5 | 20.8 |
| Elongation at break | % | 620 | 500 | 610 |
| M300 | MPa | 6.0 | 6.9 | 10.9 |
| Complex modulus E* | MPa | 6.22 | 6.80 | 6.91 |
| Loss Factor tan(d) | | 0.144 | 0.126 | 0.131 |
| Heat build-up | °C | 72 | 66 | 76 |
| Compression set | % | 58 | 52 | 54 |
| DIN abrasion | mm³ | 118 | 93 | 129 |
| MDR 165 °C-TC95% | min | 8.2 | 9.1 | 10.2 |

This illustrates that carbon blacks can successfully be manufactured from particulate scrap material feedstocks such as rubber granulate feedstock and that these carbon blacks can be useful as reinforcing filler for rubber compositions like conventional carbon blacks produced from conventional feedstocks or commercially available (recovered) carbon black.

In addition, the volume resistivity of higher loadings of the rCB in the ESBR rubber were determined (ESBR containing from 50 to 115 phr rCB). Even at high loadings of rCB (115 phr in ESBR), the volume resistivity was only decreased to 5.0·10⁹ Ω·cm. At these high loadings of the rCB (115 phr in ESBR), the hardness is increased to 82 Shore A and the elongation at break is decreased dramatically to 310 %.

Although exemplary specific variants may have been described in the present disclosure above for illustrative purposes, it is to be understood that the present disclosure is to be construed over the entire scope of the appended claims including any variations thereof under the doctrine of equivalents.

### ASPECTS

1. A carbon black having an ash content of equal to or more than 3 wt.-% and a volume resistivity of equal to or less than 1·10⁷ Ω·cm as determined in an emulsion-styrene-butadiene rubber (ESBR) containing 50 phr of the carbon black as described in the description, wherein the wt.-% is based on the total weight of the carbon black, wherein the ash content is determined according to ASTM D1506-15 at 550 °C, 16 h.
2. The carbon black according to aspect 1, wherein the carbon black has an ash content of equal or more than 5 wt.-%, wherein the wt.-% is based on the total weight of the carbon black, and wherein the ash content is determined according to ASTM D1506-15 at 550 °C, 16 h.
3. The carbon black according to any one of the preceding aspects, wherein the carbon black has an ash content in the range of 3 to 25 wt.-%, wherein the wt.-% is based on the total weight of the carbon black, and wherein the ash content is determined according to ASTM D1506-15 at 550 °C, 16 h.
4. The carbon black according to any one of the preceding aspects, wherein the carbon black has an ash content in the range of 3 to 20 wt.-%, wherein the wt.-% is based on the total weight of the carbon black, and wherein the ash content is determined according to ASTM D1506-15 at 550 °C, 16 h.
5. The carbon black according to any one of the preceding aspects, wherein the carbon black has an ash content in the range of 5 to 20 wt.-%, wherein the wt.-% is based on the total weight of the carbon black, and wherein the ash content is determined according to ASTM D1506-15 at 550 °C, 16 h.
6. The carbon black according to any one of the preceding aspects, wherein the carbon black has a volume resistivity in a range of 1·10² to 1·10⁷ Ω·cm as determined in an emulsion-styrene-butadiene rubber (ESBR) containing 50 phr of the carbon black as described in the description.
7. The carbon black according to any one of the preceding aspects, wherein the carbon black has a volume resistivity in a range of 1·10⁴ to 1·10⁶ Ω·cm as determined in an emulsion-styrene-butadiene rubber (ESBR) containing 50 phr of the carbon black as described in the description.
8. The carbon black according to any one of the preceding aspects, wherein the carbon black has:
   - a carbon mass fraction in a range of from 75.0 to 98.0 wt.-%; and
   - a hydrogen mass fraction in a range of 0.10 to 0.30 wt.- %;
   wherein the wt.-% is based on the total weight of the carbon black, and wherein the carbon mass fraction and the hydrogen mass fraction are measured using an elemental analyzer with thermal conductivity and infrared detector.
9. The carbon black according to any one of the preceding aspects, wherein the carbon black has:
   - a nitrogen mass fraction in a range of from 0.01 to 0.25 wt.-%;
   wherein the wt.-% is based on the total weight of the carbon black, and wherein the nitrogen mass fraction is measured using an elemental analyzer with thermal conductivity and infrared detector.
10. The carbon black according to any one of the preceding aspects, wherein the carbon black has:
   - a sulfur mass fraction in a range of from 0.20 to 3.0 wt.-%;
   wherein the wt.-% is based on the total weight of the carbon black, and wherein the sulfur mass fraction is measured using an elemental analyzer with thermal conductivity and infrared detector.
11. The carbon black according to any one of the preceding aspects, wherein the carbon black has:
   - a oxygen mass fraction in a range of from 0.80 to 3.00 wt.-%;
   wherein the wt.-% is based on the total weight of the carbon black, and wherein the oxygen mass fraction is measured using an elemental analyzer with thermal conductivity and infrared detector.
12. The carbon black according to any one of the preceding aspects, wherein the carbon black has a BET surface area in a range of from 45 to 120 m²/g, preferably from 50 to 110 m²/g, more preferably from 60 to 100 m²/g; wherein the BET surface area is determined according to ASTM D6556-19a.
13. The carbon black according to any one of the preceding aspects, wherein the carbon black has a statistical thickness surface area (STSA) in a range of from 45 to 110 m²/g, preferably from 50 to 100 m²/g, more preferably 60 to 95 m²/g; wherein the STSA is determined according to ASTM D6556-21.
14. The carbon black according to any one of the preceding aspects, wherein the carbon black has a transmittance value at 425 nm in a range of from 50 to 100 %, preferably from 60 to 100 %, more preferably from 70 to 100 %, even more preferably from 80 to 100 %, most preferably from 85 to 100 %, wherein the transmittance value at 425 nm is determined according to ASTM D1618-23.
15. The carbon black according to any one of the preceding aspects, wherein the carbon black has an oil absorption number (OAN) in a range of from 40 to 100 mL/100 g, preferably from 50 to 90 mL/100 g, more preferably from 50 to 80 mL/100 g, wherein the OAN is determined according to ASTM D2414-22.
16. The carbon black according to any one of the preceding aspects, wherein the carbon black has a d95 value of less than or equal to 70 µm, wherein the d95 value is determined by dry measurement using laser diffraction.
17. The carbon black according to any one of the preceding aspects, wherein the carbon black has a d95 value of less than or equal to 50 µm, wherein the d95 value is determined by dry measurement using laser diffraction.
18. The carbon black according to any one of the preceding aspects, wherein the carbon black has a d95 value of less than or equal to 20 µm, wherein the d95 value is determined by dry measurement using laser diffraction.
19. The carbon black according to any one of the preceding aspects, wherein the carbon black has a d95 value of more than or equal to 5 µm, wherein the d95 value is determined by dry measurement using laser diffraction.
20. The carbon black according to any one of the preceding aspects, wherein the carbon black is oxidized and/or functionalized.
21. The carbon black according to any one of the preceding aspects, wherein the carbon black is obtained by a process comprising:
   (i) supplying a zinc containing carbonaceous feedstock to a reactor;
   (ii) pyrolyzing the zinc containing carbonaceous feedstock in a gas atmosphere in the reactor to form and/or recover carbon black and transfer at least part of the zinc contained by the carbonaceous feedstock into the gas atmosphere; and
   (iii) separating the formed and/or recovered carbon black from the gas atmosphere.
22. The carbon black according to aspect 21, wherein the process further comprises (vi) depositing a zinc oxide material from said gas atmosphere.
23. The carbon black according to any one of aspects 21 to 22, wherein the zinc containing carbonaceous material or feedstock is provided in particulate form, wherein preferably at least 70 wt.-%, more preferably at least 80 wt.-%, or at least 90 wt.-%, or at least 98 wt.-%, of the zinc containing carbonaceous material or feedstock has a particle size of less than 2 mm, preferably less than 1 mm, more preferably less than 500 µm, and most preferably less than 250 µm, wherein the particle size is measured according to ASTM D 1511-12 (2017).
24. The carbon black according to aspect any one of aspects 21 to 23, wherein the zinc containing carbonaceous material or feedstock comprises an organic material, such as plastic and/or rubber material, and/or comprises an inorganic carbon-based material, such as carbon black.
25. The carbon black according to aspect any one of aspects 21 to 24, wherein the zinc containing carbonaceous material or feedstock comprises a scrap material, such as a scrap plastic material and/or scrap rubber material.
26. The carbon black according to aspect any one of aspects 21 to 25, wherein the zinc containing carbonaceous material or feedstock comprises a plastic granulate, rubber granulate or a combination or mixture thereof, wherein the plastic and/or rubber granulate can optionally comprise an inorganic carbon-based material such as carbon black, wherein the zinc containing carbonaceous material or feedstock preferably comprises a rubber granulate, more preferably a rubber granulate made from scrap tires and/or other waste rubber.
27. The carbon black according to aspect any one of aspects 21 to 26, wherein the zinc containing carbonaceous material or feedstock comprises zinc in the form of zinc compounds and/or salts, and/or comprises zinc in an amount of 0.1 wt.% to 10 wt.%, such as 0.3 wt.% to 5.0 wt.%, or 0.5 wt.% to 4.0 wt.%, or 1.0 to 3.0 wt.%, based on the total mass of the zinc containing carbonaceous material or feedstock.
28. The carbon black according to aspect any one of aspects 21 to 27, wherein step (ii) comprises heat treating the zinc containing carbonaceous material or feedstock at a temperature of 1,000°C or more, such as at a temperature in a range from 1,000°C to 3,000°C, preferably 1,400°C to 2,700°C, most preferably 1,800°C to 2,500°C.
29. The carbon black according to aspect any one of aspects 21 to 28, wherein step (ii) is conducted in a gas flow, and/or wherein the gas atmosphere comprises one or more oxygen-containing species, optionally further comprising one or more non-oxygen containing species.
30. The carbon black according to aspect any one of aspects 21 to 29, wherein comprising injecting the zinc containing carbonaceous material or feedstock into a hot gas flow, wherein the hot gas flow preferably has a temperature of 1,000°C or more, such as a temperature in a range from 1,000°C to 3,000°C, preferably 1,400°C to 2,700°C, most preferably 1,800°C to 2,500°C, wherein the hot gas flow is preferably produced by combustion of a combustible fuel with an oxygen containing gas, the process optionally further comprising quenching the hot gas flow after injecting the zinc containing carbonaceous material or feedstock, wherein quenching preferably comprises injecting a quenching medium into the hot gas flow.
31. The carbon black according to aspect any one of aspects 21 to 30, wherein the step of depositing a zinc oxide material from the gas atmosphere comprises contacting the gas atmosphere with a deposition surface or medium exhibiting a lower temperature than the gas atmosphere to deposit the recovered zinc oxide material from said gas atmosphere on said deposition surface or in said deposition medium, wherein preferably the deposition surface or medium is cooled and/or has a temperature of less than 1,000°C, such as in a range from 600 to less than 1,000°C.
32. The carbon black according to aspect any one of aspects 21 to 31, wherein the process is carried out in an entrained flow reactor, preferably a vertical reactor or furnace reactor.
33. Use of the carbon black according to any one of the preceding aspects as reinforcing filler or additives, UV stabilizer, conductive carbon black or pigment.
34. Use of the carbon black according to any one of the aspects 1 to 31 in rubber, plastics, inks such as printing inks, inkjet inks or other inks, toners, lacquers, coatings, papers, batteries or black matrix applications.
35. A rubber composition, wherein the rubber composition comprises (a) a rubber material and (b) a carbon black material comprising the carbon black according to any one of aspects 1 to 32.
36. The rubber composition according to aspect 35, wherein the rubber material (a) comprises natural rubber, styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or a mixture or combination of any of the foregoing.
37. The rubber composition according to any one of aspects 35 to 36, wherein the rubber material (a) comprises natural rubber, styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), butyl rubber, halogenated butyl rubber or a mixture or combination of any of the foregoing.
38. The rubber composition according to any one of aspects 35 to 37, wherein the rubber composition comprises 2 to 200 phr, preferably 30 to 70 phr of the carbon black material (b).
39. The rubber composition according to any one of aspects 35 to 38, wherein the carbon black material (b) comprises 5 to 100 wt.-%, preferably 5 to 50 wt.-% of the carbon black according to any one of aspects 1 to 32, wherein the wt.-% is based on the total weight of the carbon black material (b).
40. The rubber composition according to any one of aspects 35 to 39, wherein the carbon black material (b) comprises 5 to 25 wt.-% of the carbon black according to any one of aspects 1 to 32, wherein the wt.-% is based on the total weight of the carbon black material (b).
41. The rubber composition according to any one of aspects 35 to 40, wherein the carbon black material (b) comprises 10 to 20 wt.-% of the carbon black according to any one of aspects 1 to 32, wherein the wt.-% is based on the total weight of the carbon black material (b).
42. The rubber composition according to any one of aspects 35 to 41, wherein the rubber composition further comprises one or more additives selected from vulcanization agents, curing aids such as primary and secondary vulcanization accelerators, activators and pre-vulcanization inhibitors, processing additives such as oils, waxes, resins, plasticizers, softeners, rheology modifiers, pigments, peptizing agents, coupling agents, surfactants, biocides and anti-degradants, such as heat or light stabilizers, anti-oxidants and anti-ozonates, metal oxides, metal hydroxides, and filler materials such as silica, organo-silica, carbon nanotubes, carbon fibers, graphite and metal fibers.
43. A tire made of the rubber composition according to any one of aspects 35 to 42.
44. The tire according to aspect 43, wherein the tire comprises a tire tread, a belt, a belt reinforcement, a carcass, a carcass reinforcement, a sidewall, inner liner, apex, shoulder, hump strip, chafer and a bead filler, wherein at least one of the foregoing is made of the rubber composition according to any one of aspects 35 to 42.
45. The tire according to any one of aspects 43 or 44, wherein the tire has a circumferential tread of a cap/base configuration comprising a circumferential outer tread cap rubber layer which contains a running surface for the tire and a tread base rubber layer at least partially underlaying said tread cap rubber layer, wherein at least one of said tread cap rubber layer and said tread base rubber layer is made of the rubber composition according to any one of aspects 35 to 42.
46. The tire according to any one of aspects 43 to 45, wherein the tire comprises a sidewall, wherein the sidewall is made of the rubber composition according to any one of aspects 35 to 42, wherein the rubber composition preferably comprises:
   (a) from 30 to 70 phr of natural rubber and from 30 to 70 phr of synthetic rubber, preferably from 40 to 60 phr of natural rubber and from 40 to 60 phr of synthetic rubber, more preferably from 50 to 60 phr of natural rubber and from 40 to 50 phr of synthetic rubber wherein the synthetic rubber preferably comprises polybutadiene, more preferably consists of polybutadiene; and
   (b) from 30 to 70 phr of the carbon black material, preferably from 40 to 60 phr of the carbon black material, preferably 50 phr of the carbon black material.
47. The tire according to any one of aspects 43 to 46, wherein the tire comprises a carcass, wherein the carcass is made of the rubber composition according to any one of aspects 35 to 42, wherein the rubber composition preferably comprises:
   (a) from 40 to 80 phr of natural rubber and from 20 to 60 phr of synthetic rubber, preferably from 50 to 70 phr of natural rubber and from 30 to 50 phr of synthetic rubber, more preferably 60 phr of natural rubber and from 40 phr of synthetic rubber wherein the synthetic rubber preferably comprises polybutadiene and emulsion-styrene-butadiene rubber (ESBR), more preferably comprises 20 phr of polybutadiene and 20 phr of emulsion-styrene-butadiene rubber (ESBR); and
   (b) from 30 to 70 phr of the carbon black material, preferably from 40 to 60 phr of the carbon black material, more preferably 50 phr of the carbon black material.
48. The tire according to any one of aspects 43 to 47, wherein the tire comprises a chafer, wherein the chafer is made of the rubber composition according to any one of aspects 35 to 42, wherein the rubber composition preferably comprises:
   (a) from 30 to 70 phr of natural rubber and from 30 to 70 phr of synthetic rubber, preferably from 40 to 60 phr of natural rubber and from 40 to 60 phr of synthetic rubber, more preferably 50 phr of natural rubber and 50 phr of synthetic rubber, wherein the synthetic rubber preferably comprises emulsion-styrene-butadiene rubber (ESBR), more preferably consists of emulsion-styrene-butadiene rubber (ESBR); and
   (b) from 55 to 95 phr of the carbon black material, preferably from 65 to 85 phr of the carbon black material, preferably 75 phr of the carbon black material.
49. The tire according to any one of aspects 43 to 48, wherein the tire comprises a bead filler and/or an apex, wherein the bead filler and/or apex is/are made of the rubber composition according to any one of aspects 35 to 42, wherein the rubber composition preferably comprises:
   (a) from 80 to 100 phr of natural rubber, preferably from 90 to 100 phr of natural rubber, more preferably 100 phr of natural rubber; and
   (b) from 35 to 75 phr of the carbon black material, preferably from 45 to 65 phr of the carbon black material, more preferably from 55 phr of the carbon black material.
50. The tire according to any one of aspects 43 to 49, wherein the tire comprises an inner liner, wherein the inner liner is made of the rubber composition according to any one of aspects 35 to 42, wherein the rubber composition preferably comprises:
   (a) from 80 to 100 phr of synthetic rubber, preferably from 90 to 100 phr of synthetic rubber, more preferably 100 phr of synthetic rubber, wherein the synthetic rubber preferably comprises a halogenated butyl rubber, more preferably consists of a halogenated butyl rubber; and
   (b) from 15 to 80 phr of the carbon black material, preferably from 30 to 70 phr of the carbon black material, more preferably from 50 to 70 phr of the carbon black material.
51. The tire according to any one of aspects 43 to 50, wherein the tire comprises a tread, preferably a truck tread, wherein the tread is made of the rubber composition according to any one of aspects 35 to 42, wherein the rubber composition preferably comprises:
   (a) from 60 to 95 phr of natural rubber and from 5 to 40 phr of synthetic rubber, preferably from 70 to 85 phr of natural rubber and from 15 to 30 phr of synthetic rubber, more preferably from 80 phr of natural rubber and 20 phr of synthetic rubber, wherein the synthetic rubber preferably comprises polybutadiene, more preferably consists of polybutadiene; and
   (b) from 30 to 70 phr of the carbon black material, preferably from 40 to 60 phr of the carbon black material, more preferably from 50 phr of the carbon black material (b).
52. The tire according to any one of aspects 43 to 51, wherein the tire comprises a tread, preferably a passenger car tire tread, wherein the tread is made of the rubber composition according to any one of aspects 35 to 42, wherein the rubber composition preferably comprises:
   (a) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene; and
   (b) from 35 to 75 phr of the carbon black material, preferably from 45 to 65 phr of the carbon black material, more preferably 55 phr of the carbon black material.
53. The tire according to any one of aspects 43 to 52, wherein the tire comprises a tread, preferably a passenger car tire tread, wherein the tread is made of the rubber composition according to any one of aspects 35 to 42, wherein the rubber composition preferably comprises:
   (a) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene;
   (b) from 3 to 25 phr of the carbon black material, preferably from 5 to 15 phr of the carbon black material, more preferably 5 phr of the carbon black material; and
   (c) from 60 to 100 phr of silica, preferably from 70 to 90 phr of silica, more preferably 80 phr of silica.
54. The tire according to any one of aspects 43 to 53, wherein the tire comprises a tread, preferably an Off-the-road (OTR) tire tread, wherein the tread is made of the rubber composition according to any one of aspects 35 to 42, wherein the rubber composition preferably comprises:
   (a) from 80 to 100 phr of natural rubber, preferably from 90 to 100 phr of natural rubber, more preferably 100 phr of natural rubber; and
   (b) from 35 to 75 phr of the carbon black material, preferably from 45 to 75 phr of the carbon black material, more preferably from 55 phr of the carbon black material.
55. An article made of the rubber composition according to any one of aspects 35 to 42 being a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.
56. The article according to aspect 55, wherein the article is a conveyor belt, wherein the conveyor belt is made of the rubber composition according to any one of aspects 35 to 42, wherein the rubber composition preferably comprises:
   (a) from 60 to 95 phr of natural rubber and from 5 to 40 phr of synthetic rubber, preferably from 70 to 85 phr of natural rubber and from 15 to 30 phr of synthetic rubber, more preferably 80 phr of natural rubber and from 20 phr of synthetic rubber, wherein the synthetic rubber preferably comprises polybutadiene, more preferably consists of polybutadiene; and
   (b) from 30 to 70 phr of the carbon black material, preferably from 40 to 60 phr of the carbon black material, more preferably from 50 phr of the carbon black material.
57. The article according to aspect 55, wherein the article is a hose, wherein the hose is made of the rubber composition according to any one of aspects 35 to 42, wherein the composition preferably comprises:
   (a) natural rubber, emulsion-styrene-butadiene rubber (ESBR), polybutadiene, ethylene-propylene-diene rubber (EPDM), acrylonitrile-butadiene rubber, chlorosulfonated polyethylene, fluorocarbon rubber or a mixture or combination of any of the foregoing; and
   (b) from 30 to 100 phr of the carbon black material.
58. Use of the rubber composition according to any one of aspects 35 to 42 for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.
59. A plastic composition comprising a plastic material and a carbon black material comprising a carbon black according to any one of aspects 1 to 32.
60. The plastic composition according to aspect 59, wherein the plastic material comprises a thermoplastic polymer, a thermosetting polymer, a thermoplastic elastomer, preferably low and high density polyethylene and polypropylene, polyvinyl chloride, melamine-formaldehyde resin, phenolic resin, epoxy resin, polyamide, polyester, polyoxymethylene, polymethyl methacrylate, polycarbonate, polystyrene, polyurethane, polyphenylene oxide, polysiloxane, polyacryloamide, polyaryletherketone, polysulfone, polyetherimide, acrylonitrile styrene acrylate or acrylonitrile butadiene styrene polymer and mixtures or co-polymers of any of the foregoing.

## Claims

1. A carbon black having an ash content of equal to or more than 3 wt.-% and a volume resistivity of equal to or less than 1·10⁷ Ω·cm as determined in an emulsion-styrene-butadiene rubber (ESBR) containing 50 phr of the carbon black as described in the description,
wherein the wt.-% is based on the total weight of the carbon black,
wherein the ash content is determined according to ASTM D1506-15 at 550 °C, 16 h.

2. The carbon black according to claim 1, wherein the carbon black has an ash content of equal or more than 5 wt.-%, wherein the wt.-% is based on the total weight of the carbon black, and wherein the ash content is determined according to ASTM D1506-15 at 550 °C, 16 h.

3. The carbon black according to any one of the preceding claims, wherein the carbon black has a d95 value of less than or equal to 70 µm, wherein the d95 value is determined by dry measurement using laser diffraction.

4. The carbon black according to any one of the preceding claims, wherein the carbon black has a volume resistivity in a range of 1·10² to 1·10⁷ Ω·cm as determined in an emulsion-styrene-butadiene rubber (ESBR) containing 50 phr of the carbon black as described in the description.

5. The carbon black according to any one of the preceding claims, wherein the carbon black has:
- a carbon mass fraction in a range of from 75.0 to 98.0 wt.-%; and
- a hydrogen mass fraction in a range of 0.10 to 0.30 mass %;
wherein the wt.-% is based on the total weight of the carbon black, and wherein the carbon mass fraction and the hydrogen mass fraction are measured using an elemental analyzer with thermal conductivity and infrared detector; and/or
- a nitrogen mass fraction in a range of from 0.01 to 0.25 wt.-%;
wherein the wt.-% is based on the total weight of the carbon black, and wherein the nitrogen mass fraction is measured using an elemental analyzer with thermal conductivity and infrared detector; and/or
- a sulfur mass fraction in a range of from 0.20 to 0.30 wt.-%;
wherein the wt.-% is based on the total weight of the carbon black, and wherein the sulfur mass fraction is measured using an elemental analyzer with thermal conductivity and infrared detector; and/or
- a oxygen mass fraction in a range of from 0.80 to 3.00 wt.-%;
wherein the wt.-% is based on the total weight of the carbon black, and wherein the oxygen mass fraction is measured using an elemental analyzer with thermal conductivity and infrared detector.

6. The carbon black according to any one of the preceding claims, wherein the carbon black has at least one of, more than one or all of the following:
- a BET surface area in a range of from 45 to 120 m²/g, preferably from 50 to 110 m²/g, more preferably from 60 to 100 m²/g; wherein the BET surface area is determined according to ASTM D6556-19a;
a statistical thickness surface area (STSA) in a range of from 45 to 110 m²/g, preferably from 50 to 100 m²/g, more preferably 60 to 95 m²/g; wherein the STSA is determined according to ASTM D6556-21;
a transmittance value at 425 nm in a range of from 50 to 100 %, preferably from 60 to 100 %, more preferably from 70 to 100 %, even more preferably from 80 to 100 %, most preferably from 85 to 100 %, wherein the transmittance value at 425 nm is determined according to ASTM D1618-23;
an oil absorption number (OAN) in a range of from 40 to 100 mL/100 g, preferably from 50 to 90 mL/100 g, more preferably from 50 to 80 mL/100 g, wherein the OAN is determined according to ASTM D2414-22.

7. The carbon black according to any one of the preceding claims, wherein the carbon black is obtained by a process comprising:
(i) supplying a zinc containing carbonaceous feedstock to a reactor;
(ii) pyrolyzing the zinc containing carbonaceous feedstock in a gas atmosphere in the reactor to form and/or recover carbon black and transfer at least part of the zinc contained by the carbonaceous feedstock into the gas atmosphere; and
(iii) separating the formed and/or recovered carbon black from the gas atmosphere.

8. Use of the carbon black according to any one of the preceding claims as reinforcing filler or additives, UV stabilizer, conductive carbon black or pigment.

9. Use of the carbon black according to any one of the claims 1 to 7 in rubber, plastics, inks such as printing inks, inkjet inks or other inks, toners, lacquers, coatings, papers, batteries or black matrix applications.

10. A rubber composition, wherein the rubber composition comprises (a) a rubber material and (b) a carbon black material comprising the carbon black according to any one of claims 1 to 7.

11. A tire made of the rubber composition according to claim 10.

12. The tire according to aspect 11, wherein the tire comprises a tire tread, a belt, a belt reinforcement, a carcass, a carcass reinforcement, a sidewall, inner liner, apex, shoulder, hump strip, chafer and a bead filler, wherein at least one of the foregoing is made of the rubber composition according to claim 10.

13. An article made of the rubber composition according to claim 10 being a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

14. Use of the rubber composition according to claim 10 for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a transmission belt, a conveyor belt, a roll covering, floor mat, a shoe sole, a hose, a sealing member, o-ring, gasket, a profile, a damping element, air spring, engine mount, engine bearing, a coating or a colored or printed article.

15. A plastic composition comprising a plastic material and a carbon black material comprising a carbon black according to any one of aspects 1 to 7.
